# EUROPEAN PATENT SPECIFICATION

(11) **EP 4 605 508 B1**
(45) Date of publication and mention of the grant of the patent: **09.09.2026**
(21) Application number: 23789588.3
(22) Date of filing: 11.10.2023
(51) Int. Cl.: C11D 3/22, C08L 79/02, C11D 3/37, C11D 11/00

(54) **DETERGENT COMPOSITIONS, POLYMERS AND METHODS OF MANUFACTURING THE SAME**
WASCHMITTELZUSAMMENSETZUNGEN, POLYMERE UND VERFAHREN ZUR HERSTELLUNG DAVON
COMPOSITIONS DÉTERGENTES, POLYMÈRES ET LEURS PROCÉDÉS DE FABRICATION

(30) Priority: 18.10.2022 WO PCT/CN2022/125897
(43) Date of publication of application: 27.08.2025
(73) Proprietor: BASF SE, 67056 Ludwigshafen am Rhein (DE)
(72) Inventor: LAMPROU, Alexandros, Shanghai, Shanghai 200137 (CN); WEISS, Thomas, 67056 Ludwigshafen (DE); LEE, Yungi, Fukuoka, Fukuoka 819-0378 (JP); HUEFFER, Stephan, 67056 Ludwigshafen (DE)
(74) Representative: BASF IP Association
(86) International application number: PCT/EP2023/078137
(87) International publication number: WO 2024/083589

(56) References cited:
- EP-A2- 0 839 826
- WO-A1-2021/165468
- DE-A1- 102004 008 942
- US-A1- 2004 087 024
- GUTSCH DANIELA ET AL: "Biocompatibility and Efficacy of Oligomaltose-Grafted Poly(ethylene imine)s (OM-PEIs) for in Vivo Gene Delivery", MOLECULAR PHARMACEUTICS, vol. 10, no. 12, 15 November 2013 (2013-11-15), US, pages 4666 - 4675, XP093100282, ISSN: 1543-8384, DOI: 10.1021/mp400479g
- MARUYAMA ATSUSHI ET AL: "Characterization of interpolyelectrolyte complexes between double-stranded DNA and polylysine comb-type copolymers having hydrophilic side chains", BIOCONJUGATE CHEMISTRY, AMERICAN CHEMICAL SOCIETY, US, vol. 9, no. 2, 1 March 1998 (1998-03-01), pages 292 - 299, XP002249706, ISSN: 1043-1802, DOI: 10.1021/BC9701510
- MOKHTARI ET AL: "phD thesis: Galactose Modified Polyvinylamine, a New Class of Water Soluble Polymer", 30 April 2013 (2013-04-30), pages 1 - 141, XP093100352, Retrieved from the Internet <URL:https://macsphere.mcmaster.ca/bitstream/11375/12801/1/fulltext.pdf> [retrieved on 20231110]

## Description

The present invention is directed towards aqueous detergent compositions comprising
(A) at least one polymer comprising
   (a) a backbone that is derived from an aliphatic compound with at least 4 amino groups per molecule of which at least one amino group is a -(CH₂)ₐ-NH₂ group, the variable a being selected from 2 to 4, wherein at least 40 mol-% of said -(CH₂)ₐ-NH₂ groups are converted with
   (b) with a sugar based on a mono-, di- or polysaccharide under formation of a secondary amino group of the general formula -(CH₂)ₐ-NH-CH₂-. wherein the compositions additionally comprises
(B) at least hydrolase, or
(C) at least one anionic surfactant.

Also disclosed but not claimed are polymers (A) and a process to make such polymers (A).

Laundry detergents have to fulfil several requirements. They need to remove all sorts of soiling from laundry, for example all sorts of pigments, clay, fatty soil, and dyestuffs including dyestuff from food and drinks such as red wine, tea, coffee, and fruit including berry juices. Laundry detergents also need to exhibit a certain storage stability. Especially laundry detergents that are liquid or that contain hygroscopic ingredients often lack a good storage stability, e.g., enzymes tend to be deactivated.

Fatty soilings are still a challenge in laundering. Although numerous suggestions for removal have been made - polymers, enzymes, surfactants - solutions that work well are still of interest.

It has been suggested to use a lipase to support fat removal but many builders - especially in liquid laundry detergents - do not work well with lipase.

In addition, greying of laundry is still a significant problem. The greying is assigned to redeposition of soil during washing. In order to reduce redeposition of soil, specific native or modified polysaccharides such as polysaccharides treated with gaseous or liquid SO₂ have been developed. Numerous ingredients have been suggested with various structures, see, e.g., WO 2015/091160, EP 3 266 858 A1 and EP 3 226 858 A1, but still leave room for improvement, and the anti-greying performance of such compounds is still not sufficient. DE 10 2004 008942 A1 discloses laundry care compositions comprising cyclodextrin-grafted quaternized PEI.

Therefore, there is a continuous need for improved anti-greying agents which can be used in a laundry process. In particular, it is desirable to provide an anti-greying agent which reduces greying of a washed fabric.

Several polymers as additives have been suggested. However, many of them suffer from a quick degradation and thus a reduced shelf life.

It was therefore an objective to provide a detergent composition that fulfils the requirements discussed above.

Accordingly, the detergent compositions defined at the outset have been found, hereinafter also referred to as inventive compositions or compositions according to the present invention. Inventive compositions contain at least one polymer (A) that comprises a backbone (a) and a certain amount of mono-, di- or polysaccharide groups (b) attached to said backbone. Polymer (A) and detergent compositions comprising polymer (A) will be described in more detail below.

Backbone (A) is derived from an aliphatic compound with at least 4 amino groups per molecule, preferably 4 or from 20 to 70 amino groups per molecule, of which at least one amino group is a -(CH₂)ₐ-NH₂ group, the variable a being selected from 2 to 4.

Exampes of backbones (a) are polylysine, polyvinylamines and polyalkylene imines, for example polyethylenimines and polypropylene imines, and H₂N-(CH₂)₃-NH-CH₂CH₂-N(CH₂)₃-NH₂ ("N4-amine").

Polyalkylene imines used as backbones (a) may have a linear or preferably a branched structure. Branches may be alkylenamino groups such as, but not limited to -CH₂-CH₂-NH₂ groups or (CH₂)₃-NH₂-groups. Longer branches may be, for examples, -(CH₂)₃-N(CH₂CH₂CH₂NH₂)₂ or - (CH₂)₂-N(CH₂CH₂NH₂)₂ groups.

Polyvinylamine may have an average molecular weight M_{w} in the range of from 500 to 100,000 g/mol, determined by GPC (gel permeation chromatography), preferably with water as eluent. Due to their manufacture, polymerization of N-vinyl formamide followed by saponification, polyvinylamines may have a degree of hydrolysis in the range of from 20 to 100%, for example 80 to 100%, determined by (¹H NMR). Preferred are fully hydrolyzed polyvinylamines.

Polyvinylamines may have an average of from 2 to 200 primary amino groups per molecule, preferably 25 to 100.

The term "polyethylenimine" in the context of the present invention does not only refer to polyethylenimine homopolymers but also to polyalkylenimines containing NH-CH₂-CH₂-NH structural elements together with other alkylene diamine structural elements, for example NH-CH₂-CH₂-CH₂-NH structural elements, NH-CH₂-CH(CH₃)-NH structural elements, NH-(CH₂)₄-NH structural elements, NH-(CH₂)₆-NH structural elements or (NH-(CH₂)₈-NH structural elements but the NH-CH₂-CH₂- NH structural elements being in the majority with respect to the molar share. Preferred polyethylenimines contain NH-CH₂-CH₂-NH structural elements being in the majority with respect to the molar share, for example amounting to 60 mol-% or more, more preferably amounting to at least 70 mol-%, referring to all alkylenimine structural elements. In a special embodiment, the term polyethylenimine refers to those polyalkylenimines that bear only one or zero alkylenimine structural element per molecule that is different from NH-CH₂-CH₂-NH.

In one embodiment of the present invention, the average molecular weight M_{w} of branched polyethylenimines is in the range of from 500 to 100,000 g/mol, preferably up to 50,000 g/mol and more preferably from 800 up to 25,000 g/mol. The average molecular weight M_{w} of branched polyethylenimines may be determined by gel permeation chromatography (GPC), with 1.5 % by weight aqueous formic acid as eluent and cross-linked poly-hydroxyethyl methacrylate as stationary phase.

In one embodiment of the present invention, branched polyethylenimines display a polydispersity Q = M_{w}/Mₙ of at least 3.5, preferably in the range of from 3.5 to 10, more preferably in the range of from 4 to 9 and even more preferably from 4.0 to 5.5. In other embodiments of the present invention, branched polyalkylenimines display a polydispersity Q = M_{w}/Mₙ of 3.4 at most, for examples in the range of from 1.1 to 3.0, more preferably in the range of from 1.3 to 2.5 and even more preferably from 1.5 to 2.0.

Branched polyethylenimines may have a degree of branching in the range of from 0.30 to 0.75, preferably 0.5 to 0.7, more preferably 0.55 to 0.7, determined by ¹³C NMR spectroscopy in D₂O. In the context of the present invention, the term "branched polyethylenimines" includes polymers that are also termed highly branched polyethylenimines. The degree of branching is calculated as (*D* + *T*) / (*D + T + L*)*.* In this formula, *D* refers to the dendritic (or tertiary) amin groups, L (linear) refers to the secondary amino groups and L (linear) to the primary amino groups. Branched polyethylenimines may be obtained by the polymerization of ethylenimine (aziridine).

The term "polypropylenimine" in the context of the present invention does not only refer to polypropylenimine homopolymers but also to polyalkylenimines containing NH-CH₂-CH₂-CH₂-NH structural elements or NH-CH₂-CH(CH₃)-NH structural elements together with other alkylene diamine structural elements, for example NH-CH₂-CH₂-NH structural elements, NH-(CH₂)₄-NH structural elements, NH-(CH₂)₆-NH structural elements or (NH-(CH₂)₈-NH structural elements but the NH-CH₂-CH₂-CH₂-NH structural elements or NH-CH₂-CH(CH₃)-NH structural elements being in the majority with respect to the molar share. Preferred polypropylenimines contain NH-CH₂-CH₂-CH₂-NH or NH-CH₂-CH(CH₃)-NH structural elements being in the majority with respect to the molar share, for example amounting to 60 mol-% or more, more preferably amounting to at least 70 mol-%, referring to all alkylenimine structural elements. In a special embodiment, polypropylenimine refers to those polyalkylene imines that bear one or zero alkylenimine structural element per molecule that is different from both NH-CH₂-CH₂-CH₂-NH and NH-CH₂-CH(CH₃)-NH.

Preferably, the degree of branching in branched polypropylene imines is in the range of from 0.30 to 0.75, preferably 0.5 to 0.7, more preferably 0.55 to 0.7, determined by ¹³C NMR spectroscopy in D₂O.

Branched polyethylenimines and branched polypropylene imines may bear of from 2 to 200 primary amino groups per molecule, preferred are 4 to 50 primary amino groups.

Polylysines are polypeptides preferably bearing an average of 3 to 50, preferably 25 to 35 lysine units per molecule, for example 3 to 9 or 25 to 35 lysine units. Polylysine may be selected from α-polylysine and ε-polylysine, with ε-polylysine being preferred. Polylysine may be based on D-lysine and L-lysine and mixtures thereof, the L-enantiomer being preferred. Another embodiment of polylysine are so-called branched polylysines. In this context, a branched polylysine contains a lysine moiety in which both amino groups form an amide bond with another lysine moiety.

During manufacture, partial racemization may occur but the L-enantiomer is prevailing. Furthermore, the term polylysine in the context of the present invention includes polypeptides that contain lysine and at least one further amino acid such as alanine, glycine, valine, threonine and the like, with the majority of the amino acids in said polylysine being lysine. However, polylysines that contain lysine as sole amino acid building block are preferred.

In one embodiment of the present invention, said backbone (a) is selected from branched polyethylenimines with an average molecular weight M_{w} in the range of from 500 to 20,000 g/mol.

N4-amine may be used in pure form or with 0.1 to 20 % by weight of N3-amine as impurity.

In one embodiment of the present invention, said backbone (a) is selected from N4-amine, polyvinylamine, branched polyethylenimine, and polylysine, especially branched polylysine and ε-polylysine.

Of the (CH₂)ₐ-NH₂ groups of backbone (a),
(b) at least 40 mol-% of said CH₂-(CH₂)ₐ-NH₂ groups are converted into a secondary amine of the general formula -(CH₂)ₐ-NH-CH₂ with a sugar based on a mono-, di- or polysaccharide, hereinafter also referred to as moiety (b). It is apparent that the conversion is under reducing conditions.

Sugars eligible for formation of moiety (b) are reducing sugars. In the course of the conversion, a ring-opening reaction is observed.

Preferably, at least 50 mol-% of the -(CH₂)ₐ-NH₂ groups are converted.

Monosaccharides eligible as moiety (b) need to be based on aldose sugars, for example glyceraldehyde, erythrose, threose, ribose, arabinose, xylose and lyxose, and hexoses such as glucose, galactose, preferably in each case the D-enantiomer. Preferred monosaccharides are arabinose, xylose and glucose.

Examples of disaccharides eligible as moiety (b) are cellobiose, lactose, and maltose. Mixtures such as glucose syrup are suitable as well.

Examples of polysaccharides are maltodextrin and dextrin, maltodextrin being preferred. The dextrose equivalent may be used for calculating the amount of "aldehyde" groups that can be reacted with a -(CH₂)ₐ-NH₂ group of backbone (a).

The share of converted amino groups of backbone (a) is determined by measuring the secondary amine number, ASTM D2074. In one embodiment of the present invention, polymer (A) has an amine value, measured according to DIN 53240 (2013), in the range of from 10 to 2000, preferably 25 to 700 mg KOH/g polymer (A).

Details of the conversion reaction are disclosed further down below.

Inventive compositions may comprise impurities that stem from the synthesis of polymer (A), for example unreacted sugar based on based on mono-, di- or polysaccharide, respectively, or unreacted backbone (a) especially in embodiments wherein backbone (a) bears less than 5 primary amino groups per molecule, or reduced polyol based on mono-, di- or polysaccharide.

In one embodiment of the present invention, inventive compositions comprise in the range of from 0.1 to 10 % by weight of polymer (A), based on the total solids content. The total solids content is determined by evaporation of the volatiles at a maximum temperature of 100°C, in vacuo.

Inventive detergent compositions may be solid or liquid, but preferably, they are liquid at ambient temperature. More preferably, inventive detergent compositions are aqueous compositions. The term "aqueous compositions" in the context of the present invention refers to compositions that are liquid at ambient temperature, and in which the continuous phase contains at least 75% by volume water.

In one embodiment of the present invention, inventive compositions comprise at least one enzyme. Enzymes are identified by polypeptide sequences (also called amino acid sequences herein). The polypeptide sequence specifies the three-dimensional structure including the "active site" of an enzyme which in turn determines the catalytic activity of the same. Polypeptide sequences may be identified by a SEQ ID NO. According to the World Intellectual Property Office (WIPO) Standard ST.25 (1998) the amino acids herein are represented using three-letter code with the first letter as a capital or the corresponding one letter.

Any enzyme according to the invention relates to parent enzymes and/or variant enzymes, both having enzymatic activity. Enzymes having enzymatic activity are enzymatically active or exert enzymatic conversion, meaning that enzymes act on substrates and convert these into products. The term "enzyme" herein excludes inactive variants of an enzyme.

A "parent" sequence (of a parent protein or enzyme, also called "parent enzyme") is the starting sequence for introduction of changes (e.g., by introducing one or more amino acid substitutions, insertions, deletions, or a combination thereof) to the sequence, resulting in "variants" of the parent sequences. The term parent enzyme (or parent sequence) includes wild-type enzymes (sequences) and synthetically generated sequences (enzymes) which are used as starting sequences for introduction of (further) changes.

The term "enzyme variant" or "sequence variant" or "variant enzyme" refers to an enzyme that differs from its parent enzyme in its amino acid sequence to a certain extent. If not indicated otherwise, variant enzyme "having enzymatic activity" means that this variant enzyme has the same type of enzymatic activity as the respective parent enzyme.

In describing the variants of the present invention, the nomenclature described as follows is used:
Amino acid substitutions are described by providing the original amino acid of the parent enzyme followed by the number of the position within the amino acid sequence, followed by the substituted amino acid. Amino acid deletions are described by providing the original amino acid of the parent enzyme followed by the number of the position within the amino acid sequence, followed by *. Amino acid insertions are described by providing the original amino acid of the parent enzyme followed by the number of the position within the amino acid sequence, followed by the original amino acid and the additional amino acid. For example, an insertion at position 180 of lysine next to glycine is designated as "Gly180GlyLys" or "G180GK". In cases where a substitution and an insertion occur at the same position, this may be indicated as S99SD+S99A or in short S99AD. In cases where an amino acid residue identical to the existing amino acid residue is inserted, degeneracy in the nomenclature arises. If for example a glycine is inserted after the glycine in the above example this would be indicated by G180GG. Where different alterations can be introduced at a position, the different alterations are separated by a comma, e.g., "Arg170Tyr, Glu" represents a substitution of arginine at position 170 with tyrosine or glutamic acid. Alternatively, different alterations or optional substitutions may be indicated in brackets, e.g., Arg170[Tyr, Gly] or Arg170{Tyr, Gly}; or in short R170 [Y,G] or R170 {Y, G}; or in long R170Y, R170G.

Enzyme variants may be defined by their sequence identity when compared to a parent enzyme. Sequence identity usually is provided as "% sequence identity" or "% identity". For calculation of sequence identities, in a first step a sequence alignment has to be produced. According to this invention, a pairwise global alignment has to be produced, meaning that two sequences have to be aligned over their complete length, which is usually produced by using a mathematical approach, called alignment algorithm. According to the invention, the alignment is generated by using the algorithm of Needleman and Wunsch (J. Mol. Biol. (1979) 48, p. 443-453). Preferably, the program "NEEDLE" (The European Molecular Biology Open Software Suite (EMBOSS)) is used for the purposes of the current invention, with using the programs default parameter (gap open=10.0, gap extend=0.5 and matrix=EBLOSUM62).

According to this invention, the following calculation of %-identity applies: %-identity = (identical residues / length of the alignment region which is showing the respective sequence of this invention over its complete length) *100.

According to this invention, enzyme variants may be described as an amino acid sequence which is at least n% identical to the amino acid sequence of the respective parent enzyme with "n" being an integer between 10 and 100. In one embodiment, variant enzymes are at least 70%, at least 75%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, or at least 99% identical when compared to the full-length amino acid sequence of the parent enzyme, wherein the enzyme variant has enzymatic activity.

"Enzymatic activity" means the catalytic effect exerted by an enzyme, which usually is expressed as units per milligram of enzyme (specific activity) which relates to molecules of substrate transformed per minute per molecule of enzyme (molecular activity). Variant enzymes may have enzymatic activity according to the present invention when said enzyme variants exhibit at least 20%, at least 25%, at least 30%, at least 35%, at least 40%, at least 45%, at 10 least 50%, at least 55%, at least 60%, at least 65%, at least 70%, at least 75%, at least 80%, at least 85%, at least 90%, at least 95%, or 100% of the enzymatic activity of the respective parent enzyme.

In one embodiment, enzyme is selected from hydrolases, preferably from proteases, amylases, lipases, cellulases, and mannanases.

In one embodiment of the present invention, inventive compositions comprise
(B) at least one hydrolase, hereinafter also referred to as hydrolase (B), preferably selected from lipases, hereinafter also referred to as lipase (B).

"Lipases", "lipolytic enzyme", "lipid esterase", all refer to enzymes of EC class 3.1.1 ("carboxylic ester hydrolase"). Such a lipase (B) may have lipase activity (or lipolytic activity; triacylglycerol lipase, EC 3.1.1.3), cutinase activity (EC 3.1.1.74; enzymes having cutinase activity may be called cutinase herein), sterol esterase activity (EC 3.1.1.13) and/or wax-ester hydrolase activity (EC 3.1.1.50). Lipases (B) include those of bacterial or fungal origin.

Commercially available lipase (B) include but are not limited to those sold under the trade names Lipolase^{™}, Lipex^{™}, Lipolex^{™} and Lipoclean^{™} (Novozymes A/S), Preferenz^{™} L (DuPont), Lumafast (originally from Genencor) and Lipomax (Gist-Brocades/ now DSM).

In one aspect of the present invention, lipase (B) is selected from the following: lipases from *Humicola* (synonym *Thermomyces*)*,* e.g., from *H. lanuginosa* (*T. lanuginosus*) as described in EP 258068, EP 305216, WO 92/05249 and WO 2009/109500 or from *H. insolens* as described in WO 96/13580; lipases derived from *Rhizomucor miehei* as described in WO 92/05249; lipase from strains of *Pseudomonas* (some of these now renamed to *Burkholderia*)*,* e.g., from *P*. *alcaligenes* or *P*. *pseudoalcaligenes* (EP 218272, WO 94/25578, WO 95/30744, WO 95/35381, WO 96/00292), *P. cepacia* (EP 331376), *P. stutzeri* (GB 1372034), *P. fluorescens, Pseudomonas sp.* strain SD705 (WO 95/06720 and WO 96/27002), *P*. *wisconsinensis* (WO 96/12012), *Pseudomonas mendocina* (WO 95/14783), *P. glumae* (WO 95/35381, WO 96/00292); lipase from *Streptomyces griseus* (WO 2011/150157) and *S. pristinaespiralis* (WO 2012/137147), GDSL-type *Streptomyces* lipases (WO 2010/065455); lipase from *Thermobifida fusca* as disclosed in WO 2011/084412; lipase from *Geobacillus stearothermophilus* as disclosed in WO 2011/084417; *Bacillus* lipases, e.g., as disclosed in WO 00/60063, lipases from *B*. *subtilis* as disclosed in Dartois et al. (1992), Biochemica et Biophysica Acta, 1131, 253-360 or WO 2011/084599, *B. stearothermophilus* (JP S64-074992) or *B*. *pumilus* (WO 91/16422); lipase from *Candida antarctica* as disclosed in WO 94/01541. Suitable lipases (B) include also those which are variants of the above described lipases which have lipolytic activity. Such suitable lipase variants are e.g., those which are developed by methods as disclosed in WO 95/22615, WO 97/04079, WO 97/07202, WO 00/60063, WO 2007/087508, EP 407225 and EP 260105. Suitable lipase variants are e.g., those which are developed by methods as disclosed in WO 95/22615, WO 97/04079, WO 97/07202, WO 00/60063, WO 2007/087508, EP 407225 and EP 260105.

Suitable lipases (B) include also those that are variants of the above described lipases which have lipolytic activity. Suitable lipase variants include variants with at least 40 to 100% identity when compared to the full length polypeptide sequence of the parent enzyme as disclosed above. In one embodiment lipase variants having lipolytic activity may be at least 40%, at least 45%, at least 50%, at least 55%, at least 60%, at least 65%, at least 70%, at least 75%, at least 80%, at least 85%, at least 90%, at least 95%, at least 96%, at least 97%, at least 98% or at least 99% identical when compared to the full length polypeptide sequence of the parent enzyme as disclosed above.

Lipases (B) have "lipolytic activity". The methods for determining lipolytic activity are well-known in the literature (see e.g., Gupta et al. (2003), Biotechnol. Appl. Biochem. 37, p. 63-71). E.g., the lipase activity may be measured by ester bond hydrolysis in the substrate para-nitrophenyl palmitate (pNP-Palmitate, C:16) and releases pNP which is yellow and can be detected at 405 nm.

In one embodiment, lipase (B) is selected from fungal triacylglycerol lipase (EC class 3.1.1.3). Fungal triacylglycerol lipase may be selected from lipases of *Thermomyces lanuginosa.* In one embodiment, at least one *Thermomyces lanuginosa* lipase is selected from triacylglycerol lipase according to amino acids 1-269 of SEQ ID NO: 2 of US5869438 and variants thereof having lipolytic activity.

*Thermomyces lanuginosa* lipase may be selected from variants having lipolytic activity which are at least 90%, at least 91%, at least 92%, at least 93%, at least 94%, at least 95%, at least 96%, at least 97%, at least 98% or at least 99% identical when compared to the full length polypeptide sequence of amino acids 1-269 of SEQ ID NO: 2 of US 5,869,438.

*Thermomyces lanuginosa* lipase may be selected from variants having lipolytic activity comprising conservative mutations only, which do not pertain the functional domain of amino acids 1-269 of SEQ ID NO: 2 of US 5,869,438. Lipase variants of this embodiment having lipolytic activity may be at least 95%, at least 96%, at least 97%, at least 98% or at least 99% similar when compared to the full length polypeptide sequence of amino acids 1-269 of SEQ ID NO: 2 of US 5,869,438.

*Thermomyces lanuginosa* lipase may be selected from variants having lipolytic activity comprising at least the following amino acid substitutions when compared to amino acids 1-269 of SEQ ID NO: 2 of US 5,869,438: T231R and N233R. Said lipase variants may further comprise one or more of the following amino acid exchanges when compared to amino acids 1-269 of SEQ ID NO: 2 of US 5,869,438: Q4V, V60S, A150G, L227G, P256K.

*Thermomyces lanuginosa* lipase may be selected from variants having lipolytic activity comprising at least the amino acid substitutions T231R, N233R, Q4V, V60S, A150G, L227G, P256K within the polypeptide sequence of amino acids 1-269 of SEQ ID NO: 2 of US 5,869,438and are at least 95%, at least 96%, or at least 97% similar when compared to the full length polypeptide sequence of amino acids 1-269 of SEQ ID NO: 2 of US 5,869,438.

*Thermomyces lanuginosa* lipase may be selected from variants having lipolytic activity comprising the amino acid substitutions T231R and N233R within amino acids 1-269 of SEQ ID NO: 2 of US5869438 and are at least 95%, at least 96%, at least 97%, at least 98%, or at least 99% similar when compared to the full length polypeptide sequence of amino acids 1-269 of SEQ ID NO: 2 of US 5,869,438.

*Thermomyces lanuginosa* lipase may be a variant of amino acids 1-269 of SEQ ID NO: 2 of US5869438 having lipolytic activity, wherein the variant of amino acids 1-269 of SEQ ID NO: 2 of US 5,869,438is characterized in containing the amino acid substitutions T231R and N233R. Said lipase may be called Lipex herein.

In one embodiment of the present invention, a combination of at least two of the foregoing lipases (B) may be used.

In one embodiment of the present invention, lipases (B) are included in inventive composition in such an amount that a finished inventive composition has a lipolytic enzyme activity in the range of from 100 to 0.005 LU/mg, preferably 25 to 0.05 LU/mg of the composition. A Lipase Unit (LU) is that amount of lipase which produces 1 µmol of titratable fatty acid per minute in a pH stat. under the following conditions: temperature 30° C.; pH=9.0; substrate is an emulsion of 3.3 wt. % of olive oil and 3.3% gum arabic, in the presence of 13 mmol/I Ca²⁺ and 20 mmol/I NaCl in 5 mmol/I Tris-buffer.

In one embodiment of the present invention, inventive compositions comprise
(D) at least one protease (D), hereinafter also referred to as protease (D).

In one embodiment, at least one protease (D) is selected from the group of serine endopeptidases (EC 3.4.21), most preferably selected from the group of subtilisin type proteases (EC 3.4.21.62). Serine proteases or serine peptidases are characterized by having a serine in the catalytically active site, which forms a covalent adduct with the substrate during the catalytic reaction. A serine protease in the context of the present invention may be selected from the group consisting of chymotrypsin (e.g., EC 3.4.21.1), elastase (e.g., EC 3.4.21.36), elastase (e.g., EC 3.4.21.37 or EC 3.4.21.71), granzyme (e.g., EC 3.4.21.78 or EC 3.4.21.79), kallikrein (e.g., EC 3.4.21.34, EC 3.4.21.35, EC 3.4.21.118, or EC 3.4.21.119,) plasmin (e.g., EC 3.4.21.7), trypsin (e.g., EC 3.4.21.4), thrombin (e.g., EC 3.4.21.5), and subtilisin. Subtilisin is also known as subtilopeptidase, e.g., EC 3.4.21.62, the latter hereinafter also being referred to as "subtilisin". The subtilisin related class of serine proteases shares a common amino acid sequence defining a catalytic triad which distinguishes them from the chymotrypsin related class of serine proteases. Subtilisins and chymotrypsin related serine proteases both have a catalytic triad comprising aspartate, histidine and serine.

Proteases are active proteins exerting "protease activity" or "proteolytic activity". Proteolytic activity is related to the rate of degradation of protein by a protease or proteolytic enzyme in a defined course of time.

The methods for analyzing proteolytic activity are well-known in the literature (see e.g., Gupta et al. (2002), Appl. Microbiol. Biotechnol. 60: 381-395). Proteolytic activity may be determined by using Succinyl-Ala-Ala-Pro-Phe-p-nitroanilide (Suc-AAPF-pNA, short AAPF; see e.g., DelMar et al. (1979), Analytical Biochem 99, 316-320) as substrate. pNA is cleaved from the substrate molecule by proteolytic cleavage, resulting in release of yellow color of free pNA which can be quantified by measuring OD₄₀₅.

Proteolytic activity may be provided in units per gram enzyme. For example, 1 U protease may correspond to the amount of protease which sets free 1 µmol folin-positive amino acids and peptides (as tyrosine) per minute at pH 8.0 and 37°C (casein as substrate).

Proteases of the subtilisin type (EC 3.4.21.62) may be bacterial proteases originating from a microorganism selected from *Bacillus, Clostridium, Enterococcus, Geobacillus, Lactobacillus, Lactococcus, Oceanobacillus, Staphylococcus, Streptococcus,* or *Streptomyces* protease, or a Gram-negative bacterial polypeptide such as a *Campylobacter, E. coli, Flavobacterium, Fuso-bacterium, Helicobacter, Ilyobacter, Neisseria, Pseudomonas, Salmonella,* and *Ureaplasma.*

In one aspect of the invention, at least one protease (D) is selected from *Bacillus alcalophilus, Bacillus amyloliquefaciens, Bacillus brevis, Bacillus circulans, Bacillus clausii, Bacillus coagulans, Bacillus firmus, Bacillus gibsonii, Bacillus lautus, Bacillus lentus, Bacillus licheniformis, Bacillus megaterium, Bacillus pumilus, Bacillus sphaericus, Bacillus stearothermophilus, Bacillus subtilis,* or *Bacillus thuringiensis* protease.

In one embodiment of the present invention, at least one protease (D) is selected from the following: subtilisin from *Bacillus amyloliquefaciens* BPN' (described by Vasantha et al. (1984) J. Bacteriol. Volume 159, p. 811-819 and JA Wells et al. (1983) in Nucleic Acids Research, Volume 11, p. 7911-7925); subtilisin from *Bacillus licheniformis* (subtilisin Carlsberg; disclosed in EL Smith et al. (1968) in J. Biol Chem, Volume 243, pp. 2184-2191, and Jacobs et al. (1985) in Nucl. Acids Res, Vol 13, p. 8913-8926); subtilisin PB92 (original sequence of the alkaline protease PB92 is described in EP 283075 A2); subtilisin 147 and/or 309 (Esperase^{®}, Savinase^{®}, respectively) as disclosed in WO 89/06279; subtilisin from *Bacillus lentus* as disclosed in WO 91/02792, such as from *Bacillus lentus* DSM 5483 or the variants of *Bacillus lentus* DSM 5483 as described in WO 95/23221; subtilisin from *Bacillus alcalophilus* (DSM 11233) disclosed in DE 10064983; subtilisin from *Bacillus gibsonii* (DSM 14391) as disclosed in WO 2003/054184; subtilisin from *Bacillus sp.* (DSM 14390) disclosed in WO 2003/056017; subtilisin from *Bacillus sp.* (DSM 14392) disclosed in WO 2003/055974; subtilisin from *Bacillus gibsonii* (DSM 14393) disclosed in WO 2003/054184; subtilisin having SEQ ID NO: 4 as described in WO 2005/063974; subtilisin having SEQ ID NO: 4 as described in WO 2005/103244; subtilisin having SEQ ID NO: 7 as described in WO 2005/103244; and subtilisin having SEQ ID NO: 2 as described in application DE 102005028295.4.

Examples of useful proteases in accordance with the present invention comprise the variants described in: WO 92/19729, WO 95/23221, WO 96/34946, WO 98/20115, WO 98/20116, WO 99/11768, WO 01/44452, WO 02/088340, WO 03/006602, WO 2004/03186, WO 2004/041979, WO 2007/006305, WO 2011/036263, WO 2011/036264, and WO 2011/072099. Suitable examples comprise especially variants of subtilisin protease derived from SEQ ID NO:22 as described in EP 1921147 (which is the sequence of mature alkaline protease from *Bacillus lentus* DSM 5483) with amino acid substitutions in one or more of the following positions: 3, 4, 9, 15, 24, 27, 33, 36, 57, 68, 76, 77, 87, 95, 96, 97, 98, 99, 100, 101, 102, 103, 104, 106, 118, 120, 123, 128, 129, 130, 131, 154, 160, 167, 170, 194, 195, 199, 205, 206, 217, 218, 222, 224, 232, 235, 236, 245, 248, 252 and 274 (according to the BPN' numbering), which have proteolytic activity. In one embodiment, such a protease is not mutated at positions Asp32, His64 and Ser221 (according to BPN' numbering).

In one embodiment, at least one protease (D) has a sequence according to SEQ ID NO:22 as described in EP 1921147, or a protease which is at least 80% identical thereto and has proteolytic activity. In one embodiment, said protease is characterized by having amino acid glutamic acid, or aspartic acid, or asparagine, or glutamine, or alanine, or glycine, or serine at position 101 (according to BPN' numbering) and has proteolytic activity. In one embodiment, said protease comprises one or more further substitutions: (a) threonine at position 3 (3T), (b) isoleucine at position 4 (4I), (c) alanine, threonine or arginine at position 63 (63A, 63T, or 63R), (d) aspartic acid or glutamic acid at position 156 (156D or 156E), (e) proline at position 194 (194P), (f) methionine at position 199 (199M), (g) isoleucine at position 205 (205I), (h) aspartic acid, glutamic acid or glycine at position 217 (217D, 217E or 217G), (i) combinations of two or more amino acids according to (a) to (h).

At least one protease (D) may be at least 80% identical to SEQ ID NO:22 as described in EP 1921147 and is characterized by comprising one amino acid (according to (a)-(h)) or combinations according to (i) together with the amino acid 101E, 101D, 101N, 101Q, 101A, 101G, or 101S (according to BPN' numbering). In one embodiment, said protease is characterized by comprising the mutation (according to BPN' numbering) R101E, or S3T + V4I + V205I, or R101 E and S3T, V4I, and V205I, or S3T + V4I + V199M + V205I + L217D, and having proteolytic activity. A protease having a sequence according to SEQ ID NO: 22 as described in EP 1921147 with 101E may be called Lavergy herein.

In one embodiment, protease according to SEQ ID NO:22 as described in EP 1921147 is characterized by comprising the mutation (according to BPN' numbering) S3T + V4I + S9R + A15T + V68A + D99S + R101S + A103S + I104V + N218D, and by having proteolytic activity.

Inventive compositions may comprise a combination of at least two proteases (D), preferably selected from the group of serine endopeptidases (EC 3.4.21), more preferably selected from the group of subtilisin type proteases (EC 3.4.21.62) - all as disclosed above.

It is preferred to use a combination of lipase (B) and protease (D) in compositions, for example 1 to 2% by weight of protease (D) and 0.1 to 0.5% by weight of lipase (B), both referring to the total weight of the composition.

In the context of the present invention, lipase (B) and/or protease (D) is deemed called stable when its enzymatic activity "available in application" equals at least 60% when compared to the initial enzymatic activity before storage. An enzyme may be called stable within this invention if its enzymatic activity available in application is at least 60%, at least 65%, at least 70%, at least 75%, at least 80%, at least 85%, at least 90%, at least 95%, at least 98%, at least 99%, or at least 99.5% when compared to the initial enzymatic activity before storage.

Subtracting a% from 100% gives the "loss of enzymatic activity during storage" when compared to the initial enzymatic activity before storage. In one embodiment, an enzyme is stable according to the invention when essentially no loss of enzymatic activity occurs during storage, i.e. loss in enzymatic activity equals 0% when compared to the initial enzymatic activity before storage. Essentially no loss of enzymatic activity within this invention may mean that the loss of enzymatic activity is less than 30%, less than 25%, less than 20%, less than 15%, less than 10%, less than 9%, less than 8%, less than 7%, less than 6%, less than 5%.

In one embodiment of the present invention, inventive compositions comprise
(C) at least one anionic surfactant, hereinafter also being referred to as anionic surfactant (C).

Examples of anionic surfactants (C) are alkali metal and ammonium salts of C₈-C₁₈-alkyl sulfates, of C₈-C₁₈-fatty alcohol polyether sulfates, of sulfuric acid half-esters of ethoxylated C₄-C₁₂-alkylphenols (ethoxylation: 1 to 50 mol of ethylene oxide/mol), C₁₂-C₁₈ sulfo fatty acid alkyl esters, for example of C₁₂-C₁₈ sulfo fatty acid methyl esters, furthermore of C₁₂-C₁₈-alkylsulfonic acids and of C₁₀-C₁₈-alkylarylsulfonic acids. Preference is given to the alkali metal salts of the aforementioned compounds, particularly preferably the sodium salts.

Further examples of anionic surfactants (C) are soaps, for example the sodium or potassium salts of stearic acid, oleic acid, palmitic acid, ether carboxylates, and alkylether phosphates.

In a preferred embodiment of the present invention, anionic surfactant (C) is selected from compounds according to general formula (I)

R¹-O(CH₂CH₂0)ₓ₁-SO₃M (I)

wherein
- R¹: n-C₁₀-C₁₈-alkyl, especially with an even number of carbon atoms, for example n-decyl, n-dodecyl, n-tetradecyl, n-hexadecyl, or n-octadecyl, preferably C₁₀-C₁₄-alkyl, and even more preferably n-C₁₂-alkyl,
- x1: being a number in the range of from 1 to 5, preferably 2 to 4 and even more preferably 3.
- M: being selected from alkali metals, preferably potassium and even more preferably sodium.

In anionic surfactant (C), x1 may be an average number and therefore x1 is not necessarily a whole number, while in individual molecules according to formula (I), x1 denotes a whole number.

In one embodiment of the present invention, inventive compositions may contain 0.1 to 60 % by weight of anionic surfactant (C), preferably 5 to 50 % by weight.

Inventive compositions may comprise ingredients other than the aforementioned. Examples are non-ionic surfactants, fragrances, dyestuffs, biocides, preservatives, enzymes, hydrotropes, builders, viscosity modifiers, polymers, buffers, defoamers, and anti-corrosion additives.

Preferred inventive compositions may contain one or more non-ionic surfactants.

Preferred non-ionic surfactants are alkoxylated alcohols, di- and multiblock copolymers of ethylene oxide and propylene oxide and reaction products of sorbitan with ethylene oxide or propylene oxide, alkyl polyglycosides (APG), hydroxyalkyl mixed ethers and amine oxides.

Preferred examples of alkoxylated alcohols and alkoxylated fatty alcohols are, for example, compounds of the general formula (II) 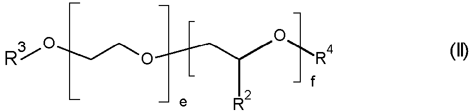 in which the variables are defined as follows:
- R²: is identical or different and selected from hydrogen and linear C₁-C₁₀-alkyl, preferably in each case identical and ethyl and particularly preferably hydrogen or methyl,
- R³: is selected from C₈-C₂₂-alkyl, branched or linear, for example n-C₈H₁₇, n-C₁₀H₂₁, n-C₁₂H₂₅, n-C₁₄H₂₉, n-C₁₆H₃₃ or n-C₁₈H₃₇,
- R⁴: is selected from C₁-C₁₀-alkyl, methyl, ethyl, n-propyl, isopropyl, n-butyl, isobutyl, sec-butyl, tert-butyl, n-pentyl, isopentyl, sec-pentyl, neopentyl, 1,2-dimethylpropyl, isoamyl, n-hexyl, isohexyl, sec-hexyl, n-heptyl, n-octyl, 2-ethylhexyl, n-nonyl, n-decyl or isodecyl,

The variables e and f are in the range from zero to 300, where the sum of e and f is at least one, preferably in the range of from 3 to 50. Preferably, e is in the range from 1 to 100 and f is in the range from 0 to 30.

In one embodiment, compounds of the general formula (II) may be block copolymers or random copolymers, preference being given to block copolymers.

Other preferred examples of alkoxylated alcohols are, for example, compounds of the general formula (III) 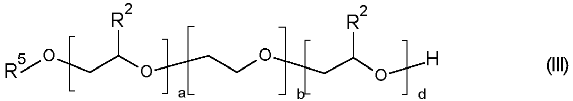 in which the variables are defined as follows:
- R²: is identical or different and selected from hydrogen and linear C₁-C₀-alkyl, preferably identical in each case and ethyl and particularly preferably hydrogen or methyl,
- R⁵: is selected from C₆-C₂₀-alkyl, branched or linear, in particular n-C₈H₁₇, n-C₁₀H₂₁, n-C₁₂H₂₅, n-C₁₃H₂₇, n-C₁₅H₃₁, n-C₁₄H₂₉, n-C₁₆H₃₃, n-C₁₈H₃₇,
- a: is a number in the range from zero to 10, preferably from 1 to 6,
- b: is a number in the range from 1 to 80, preferably from 4 to 20,
- d: is a number in the range from zero to 50, preferably 4 to 25.

The sum a + b + d is preferably in the range of from 5 to 100, even more preferably in the range of from 9 to 50.

Compounds of the general formula (III a) and (III b) may be block copolymers or random copolymers, preference being given to block copolymers.

Further suitable nonionic surfactants are selected from di- and multiblock copolymers, composed of ethylene oxide and propylene oxide. Further suitable nonionic surfactants are selected from ethoxylated or propoxylated sorbitan esters. Amine oxides or alkyl polyglycosides, especially linear C₄-C₁₆-alkyl polyglucosides and branched C₈-C₁₄-alkyl polyglycosides such as compounds of general average formula (IV) are likewise suitable. 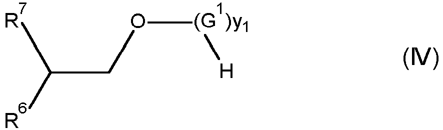 wherein:
- R⁶: is C₁-C₄-alkyl, in particular ethyl, n-propyl or isopropyl,
- R⁷: is -(CH₂)₂-R⁶,
- G¹: is selected from monosaccharides with 4 to 6 carbon atoms, especially from glucose and xylose,
- y1: in the range of from 1.1 to 4, y1 being an average number,

Further examples of non-ionic surfactants are compounds of general formula (V) and (VI) 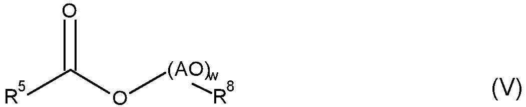 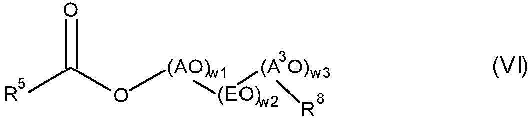
AO is selected from ethylene oxide, propylene oxide and butylene oxide,
EO is ethylene oxide, CH₂CH₂-O,
R⁸ selected from C₈-C₁₈-alkyl, branched or linear, and R⁵ is defined as above.
A³O is selected from propylene oxide and butylene oxide,
w is a number in the range of from 15 to 70, preferably 30 to 50,
w1 and w3 are numbers in the range of from 1 to 5, and
w2 is a number in the range of from 13 to 35.

An overview of suitable further nonionic surfactants can be found in EP-A 0 851 023 and in DE-A 198 19 187.

Mixtures of two or more different nonionic surfactants selected from the foregoing may also be present.

Other surfactants that may be present are selected from amphoteric (zwitterionic) surfactants and anionic surfactants and mixtures thereof.

Examples of amphoteric surfactants are those that bear a positive and a negative charge in the same molecule under use conditions. Preferred examples of amphoteric surfactants are so-called betaine-surfactants. Many examples of betaine-surfactants bear one quaternized nitrogen atom and one carboxylic acid group per molecule. A particularly preferred example of amphoteric surfactants is cocamidopropyl betaine (lauramidopropyl betaine).

Examples of amine oxide surfactants are compounds of the general formula (VII)

R⁹R¹⁰R¹¹N→O (VII)

wherein R⁹, R¹⁰, and R¹¹ are selected independently from each other from aliphatic, cycloaliphatic or C₂-C₄-alkylene C₁₀-C₂₀-alkylamido moieties. Preferably, R⁹ is selected from C₈-C₂₀-alkyl or C₂-C₄-alkylene C₁₀-C₂₀-alkylamido and R¹⁰ and R¹¹ are both methyl.

A particularly preferred example is lauryl dimethyl aminoxide, sometimes also called lauramine oxide. A further particularly preferred example is cocamidylpropyl dimethylaminoxide, sometimes also called cocamidopropylamine oxide.

In one embodiment of the present invention, inventive compositions may contain 0.1 to 60 % by weight of at least one surfactant, selected from non-ionic surfactants, amphoteric surfactants and amine oxide surfactants.

In a preferred embodiment, inventive solid detergent compositions for cleaners and especially those for automatic dishwashing do not contain any anionic surfactant.

Inventive compositions may contain at least one bleaching agent, also referred to as bleach. Bleaching agents may be selected from chlorine bleach and peroxide bleach, and peroxide bleach may be selected from inorganic peroxide bleach and organic peroxide bleach. Preferred are inorganic peroxide bleaches, selected from alkali metal percarbonate, alkali metal perborate and alkali metal persulfate.

Examples of organic peroxide bleaches are organic percarboxylic acids, especially organic percarboxylic acids.

In inventive compositions, alkali metal percarbonates, especially sodium percarbonates, are preferably used in coated form. Such coatings may be of organic or inorganic nature. Examples are glycerol, sodium sulfate, silicate, sodium carbonate, and combinations of at least two of the foregoing, for example combinations of sodium carbonate and sodium sulfate.

Suitable chlorine-containing bleaches are, for example, 1,3-dichloro-5,5-dimethylhydantoin, N-chlorosulfamide, chloramine T, chloramine B, sodium hypochlorite, calcium hypochlorite, magnesium hypochlorite, potassium hypochlorite, potassium dichloroisocyanurate and sodium dichloroisocyanurate.

Inventive compositions may comprise, for example, in the range from 3 to 10% by weight of chlorine-containing bleach.

Inventive compositions may comprise one or more bleach catalysts. Bleach catalysts can be selected from bleach-boosting transition metal salts or transition metal complexes such as, for example, manganese-, iron-, cobalt-, ruthenium- or molybdenum-salen complexes or carbonyl complexes. Manganese, iron, cobalt, ruthenium, molybdenum, titanium, vanadium and copper complexes with nitrogen-containing tripod ligands and also cobalt-, iron-, copper- and ruthenium-amine complexes can also be used as bleach catalysts.

Inventive compositions may comprise one or more bleach activators, for example N-methylmorpholinium-acetonitrile salts ("MMA salts"), trimethylammonium acetonitrile salts, N-acylimides such as, for example, N-nonanoylsuccinimide, 1,5-diacetyl-2,2-dioxohexahydro-1,3,5-triazine ("DADHT") or nitrile quats (trimethylammonium acetonitrile salts).

Further examples of suitable bleach activators are tetraacetylethylenediamine (TAED) and tetraacetylhexylenediamine.

Examples of fragrances are benzyl salicylate, 2-(4-tert.-butylphenyl) 2-methylpropional, commercially available as Lilial^{®}, and hexyl cinnamaldehyde.

Examples of dyestuffs are Acid Blue 9, Acid Yellow 3, Acid Yellow 23, Acid Yellow 73, Pigment Yellow 101, Acid Green 1, Solvent Green 7, and Acid Green 25.

Inventive compositions may contain one or more preservatives or biocides. Biocides and preservatives prevent alterations of inventive liquid detergent compositions due to attacks from microorganisms. Examples of biocides and preservatives are BTA (1,2,3-benzotriazole), benzalkonium chlorides, 1,2-benzisothiazolin-3-one ("BIT"), 2-methyl-2H-isothiazol-3-one ("MIT") and 5-chloro-2-methyl-2H-isothiazol-3-one ("CIT"), benzoic acid, sorbic acid, iodopropynyl butyl-carbamate ("IPBC"), dichlorodimethylhydantoine ("DCDMH"), bromochlorodimethylhydantoine ("BCDMH"), and dibromodimethylhydantoine ("DBDMH").

Examples particularly of interest are the following antimicrobial agents and/or preservatives:
4,4'-dichloro 2-hydroxydiphenyl ether (CAS-No. 3380-30-1), further names: 5-chloro-2-(4-chlorophenoxy) phenol, Diclosan, DCPP, which is commercially available as a solution of 30 wt% of 4,4'-dichloro 2-hydroxydiphenyl ether in 1,2 propyleneglycol under the trade name Tinosan^{®} HP 100;
   and
2-Phenoxyethanol (CAS-no. 122-99-6, further names: phenoxyethanol, methylphenylglycol, phenoxetol, ethylene glycol phenyl ether, Ethylene glycol monophenyl ether, Protectol^{®} PE);
2-bromo-2-nitropropane-1,3-diol (CAS-No. 52-51-7, further names: 2-bromo-2-nitro-1,3-propanediol, Bronopol^{®}, Protectol^{®} BN, Myacide AS); glutaraldehyde (CAS-No. 111-30-8, further names: 1-5-pentandial, pentane-1,5-dial, glutaral, glutardialdehyde, Protectol^{®} GA, Protectol^{®} GA 50, Myacide^{®} GA); glyoxal (CAS No. 107-22-2; further names: ethandial, oxylaldehyde, 1,2-ethandial, Protectol^{®} GL); 2-butyl-benzo[d]isothiazol-3-one (BBIT, CAS No. 4299-07-4); 2-methyl-2H-isothiazol-3-one (MIT, CAS No 2682-20-4); 2-octyl-2H-isothiazol-3-one (OIT, CAS No. 26530-20-1); 5-Chloro-2-methyl-2H-isothiazol-3-one (CIT, CMIT, CAS No. 26172-55-4); mixtures of 5-chloro-2-methyl-2H- isothiazol-3-one (CMIT, EINECS 247-500-7) and 2-methyl-2H-isothiazol-3-one (MIT, EINECS 220-239-6) (Mixture of CMIT/MIT, CAS No. 55965-84-9); 1,2-benzisothiazol-3(2H)-one (BIT, CAS No. 2634-33-5);
Hexa-2,4-dienoic acid (Sorbic acid, CAS No. 110-44-1) and its salts, e.g., calcium sorbate, sodium sorbate, potassium (E,E)-hexa-2,4-dienoate (Potassium Sorbate, CAS No. 24634-61-5); lactic acid and its salts; especially sodium lactate, L-(+)-lactic acid (CAS No. 79-33-4);
Benzoic acid (CAS No 65-85-0, CAS No. 532-32-1) and salts of benzoic acid, e.g., sodium benzoate, ammonium benzoate, calcium benzoate, magnesium benzoate, MEA-benzoate, potassium benzoate; salicylic acid and its salts, e.g., calcium salicylate, magnesium salicylate, MEA salicylate, sodium salicylate, potassium salicylate, TEA salicylate; Benzalkonium chloride, benzalkonium bromide, benzalkonium saccharinate (CAS Nos 8001-54-5, 63449-41-2, 91080-29-4, 68989-01-5, 68424-85-1, 68391-01-5, 61789-y71-7, 85409-22-9);
didecyldimethylammonium chloride (DDAC, CAS No. 68424-95-3 and CAS No. 7173-51-5); N-(3-aminopropyl)-N-dodecylpropane-1,3-diamine (Diamine, CAS No. 2372-82-9); peracetic acid (CAS No. 79-21-0); hydrogen peroxide (CAS No. 7722-84-1).

Biocide or preservative may be added to the inventive composition in a concentration of 0.001 to 10% relative to the total weight of the composition. Preferably, inventive compositions contain 2-phenoxyethanol in a concentration of 0.1 to 2% or 4,4'-dichloro 2-hydroxydiphenyl ether (DCPP) in a concentration of 0.005 to 0.6%.

Also disclosed is a method of preserving an inventive composition against microbial contamination or growth, which method comprises addition of 2-phenoxyethanol.

Further disclosed is a method of providing an antimicrobial effect on textiles after treatment with an inventive composition containing 4,4'-dichloro 2-hydroxydiphenyl ether (DCPP).

Examples of viscosity modifiers are agar-agar, carragene, tragacanth, gum arabic, alginates, pectins, hydroxyethyl cellulose, hydroxypropyl cellulose, starch, gelatin, locust bean gum, cross-linked poly(meth)acrlyates, for example polyacrlyic acid cross-linked with bis-(meth)acrylamide, furthermore silicic acid, clay such as - but not limited to - montmorrillionite, zeolite, dextrin, and casein.

Hydrotropes in the context with the present invention are compounds that facilitate the dissolution of compounds that exhibit limited solubility in water. Examples of hydrotropes are organic solvents such as ethanol, isopropanol, ethylene glycol, 1,2-propylene glycol, and further organic solvents that are water-miscible under normal conditions without limitation. Further examples of suitable hydrotropes are the sodium salts of toluene sulfonic acid, of xylene sulfonic acid, and of cumene sulfonic acid.

Examples of polymers other than polymer (A) are especially polyacrylic acid and its respective alkali metal salts, especially its sodium salt. A suitable polymer is in particular polyacrylic acid, preferably with an average molecular weight M_{w} in the range from 2,000 to 40,000 g/mol. preferably 2,000 to 10,000 g/mol, in particular 3,000 to 8,000 g/mol, each partially or fully neutralized with alkali, especially with sodium. Suitable as well are copolymeric polycarboxylates, in particular those of acrylic acid with methacrylic acid and of acrylic acid or methacrylic acid with maleic acid and/or fumaric acid. Polyacrylic acid and its respective alkali metal salts may serve as soil anti-redeposition agents.

Further examples of polymers are polyvinylpyrrolidones (PVP). Polyvinylpyrrolidones may serve as dye transfer inhibitors.

Further examples of polymers are polyethylene terephthalates, polyoxyethylene terephthalates, and polyethylene terephthalates that are end-capped with one or two hydrophilic groups per molecule, hydrophilic groups being selected from CH₂CH₂CH₂-SO₃Na, CH₂CH(CH₂-SO₃Na)₂, and CH₂CH(CH₂SO₂Na)CH₂-SO₃Na.

Examples of buffers are monoethanolamine and N,N,N-triethanolamine.

Examples of defoamers are silicones.

Inventive compositions are not only good in cleaning soiled laundry with respect to organic fatty soil such as oil. Inventive liquid detergent compositions are very useful for removing non-bleachable stains such as, but not limited to stains from red wine, tea, coffee, vegetables, and various fruit juices like berry juices from laundry. They still do not leave residues on the clothes. A further aspect of the present invention is therefore the use of inventive compositions for laundry care. Laundry care in this context includes laundry cleaning.

In another aspect, inventive compositions are useful for hard surface cleaning. Also disclosed is therefore the use of inventive compositions for hard surface cleaning.

In the context of the present invention, the term "composition for hard surface cleaning" includes cleaners for home care and for industrial or institutional applications. The term "composition for hard surface cleaning" includes compositions for dishwashing, especially hand dishwash and automatic dishwashing and ware-washing, and compositions for hard surface cleaning such as, but not limited to compositions for bathroom cleaning, kitchen cleaning, floor cleaning, descaling of pipes, window cleaning, car cleaning including truck cleaning, furthermore, open plant cleaning, cleaning-in-place, metal cleaning, disinfectant cleaning, farm cleaning, high pressure cleaning, but not laundry detergent compositions. A special embodiment of compositions for hard surface cleaning are automatic dishwashing compositions.

In the context of the present invention, the terms "compositions for hard surface cleaning" and "compositions for hard surface cleaners" are used interchangeably.

In the context of the present invention and unless expressly stated otherwise, percentages in the context of ingredients of laundry detergent compositions are percentages by weight and refer to the total solids content of the respective laundry detergent composition. In the context of the present invention and unless expressly stated otherwise, percentages in the context of ingredients of detergent composition for hard surface cleaners are percentages by weight and refer to the total solids content of the detergent composition for hard surface cleaning.

Inventive compositions when used for automatic dishwashing preferably contain
(E) at least one builder component selected from aminopolycarboxylic acids and preferably their alkali metal salts, in the context of the present invention also referred to as complexing agent (E) or sequestrant (E). In the context of the present invention, the terms sequestrants and chelating agents are used interchangeably.

Examples of sequestrants (E) are alkali metal salts of MGDA (methyl glycine diacetic acid), GLDA (glutamic acid diacetic acid), IDS (iminodisuccinate), EDTA, and polymers with complexing groups like, for example, polyethylenimine in which 20 to 90 mole-% of the N-atoms bear at least one CH₂COO⁻ group, and their respective alkali metal salts, especially their sodium salts, for example MGDA-Na₃, GLDA-Na₄, or IDS-Na₄.

Preferred sequestrants are those according to general formula (IX a)

[CH₃-CH(COO)-N(CH₂-COO)₂]M₃₋ₓ₂Hₓ₂ (IX a)

wherein M is selected from ammonium and alkali metal cations, same or different, for example cations of sodium, potassium, and combinations of at least two of the foregoing. Ammonium may be substituted with alkyl but non-substituted ammonium NH₄⁺ is preferred. Preferred examples of alkali metal cations are sodium and potassium and combinations of sodium and potassium, and even more preferred in compound according to general formula (II a) all M are the same and they are all Na;
and x2 in formula (II a) is in the range of from zero to 1.0,
or (IX b)

   [OOC-CH₂CH₂-CH(COO)-N(CH₂-COO)₂]M₄₋ₓ₃Hₓ₃ (IX b)
wherein M is as defined above, and x3 in formula (IX b) is in the range of from zero to 2.0, preferably to 1.0,
or (IX c)

   [OOC-CH₂-CH(COO)]-N-CH(COO)-CH₂-COO]M₄₋ₓ₄Hₓ₄ (IX c)
wherein M is as defined above, and x4 in formula (IX c) is in the range of from zero to 2.0, preferably to 1.0.

In one embodiment of the present invention, said inventive composition contains a combination of at least two of the foregoing, for example a combination of chelating agent according to general formula (IX a) and a chelating agent according to general formula (IX b).

Chelating agents according to the general formulae (IX a) and (IX b) are preferred. Even more preferred are chelating agents according to the general formula (IX a).

In one embodiment of the present invention, compound according to general formula (IX a) is selected from ammonium or alkali metal salt of racemic MGDA and from ammonium and alkali metal salts of mixtures of L- and D-enantiomers according to formula (IX a), said mixture containing predominantly the respective L-isomer with an enantiomeric excess (ee) in the range of from 5 to 99%, preferably 5 to 95%, more preferably from 10 to 75% and even more preferably from 10 to 66%.

In one embodiment of the present invention, compound according to general formula (IX b) is selected from at least one alkali metal salt of a mixture of L- and D- enantiomers according to formula (IX b), said mixture containing the racemic mixture or preferably predominantly the respective L-isomer, for example with an enantiomeric excess (ee) in the range of from 5 to 99%, preferably 15 to 95%.

The enantiomeric excess of compound according to general formula (IX a) may be determined by measuring the polarization (polarimetry) or preferably by chromatography, for example by HPLC with a chiral column, for example with one or more cyclodextrins as immobilized phase or with a ligand exchange (Pirkle-brush) concept chiral stationary phase. Preferred is determination of the ee by HPLC with an immobilized optically active amine such as D-penicillamine in the presence of copper(+II) salt. The enantiomeric excess of compound according to general formula (IX b) salts may be determined by measuring the polarization (polarimetry).

Due to the environmental concerns raised in the context with the use of phosphates, it is preferred that advantageous compositions are free from phosphate. "Free from phosphate" should be understood in the context of the present invention as meaning that the content of phosphate and polyphosphate is in sum in the range of from detection level to 1% by weight, preferably from 10 ppm to 0.2% by weight, determined by gravimetry.

In one embodiment of the present invention, inventive compositions contain in the range of from 0.5 to 50% by weight of sequestrant (E), preferably 1 to 35% by weight, referring to the total solids content.

In order to be suitable as liquid laundry compositions, inventive compositions may be in bulk form or as unit doses, for example in the form of sachets or pouches. Suitable materials for pouches are water-soluble polymers such as polyvinyl alcohol.

In a preferred embodiment of the present invention, inventive compositions are liquid or gel-type at ambient temperature. In another preferred embodiment of the present invention, inventive compositions are solid at ambient temperature, for example powders or tabs.

In one embodiment of the present invention, inventive compositions are liquid or gel-type and have a pH value in the range of from 7 to 9, preferably 7.5 to 8.5. In embodiments where inventive compositions are solid, their pH value may be in the range of from 7.5 to 11, determined after dissolving 1 g/100 ml in distilled water and at ambient temperature. In embodiments where inventive compositions are used for hard surfaces like tiles, for example bathroom tiles, their pH value may even be acidic, for example from 3 to 6.

In one embodiment of the present invention, inventive compositions are liquid or gel-type and have a total solids content in the range of from 8 to 80%, preferably 10 to 50%, determined by drying under vacuum at 80°C.

Also disclosed but not claimed are polymers (A), hereinafter also referred to as as polymers (A), and they have been described above.

In one embodiment of the present invention, polymer (A) has an average molecular weight M_{w} in the range from 750 to 350,000 g/mol, preferably 3,000 to 50,000 g/mol. The molecular weight may be determined by GPC with water as eluent.

In one embodiment of the present invention, polymer (A) has a Hazen colour number in the range of from 20 to 500, determined in a 10 % weight aqueous solution.

Polymers (A) may contain impurities that stem from the synthesis of polymer (A), for example unreacted sugar based on based on mono-, di- or polysaccharide (b), respectively, or unreacted backbone (a) especially in embodiments wherein backbone (a) bears less than 5 primary amino groups per molecule, or reduced polyol based on mono-, di- or polysaccharide. The amount of impurity may be in the range of from 0.5% to 10%, more preferably in the range of 2% to 5% by weight.

In one aspect, the invention is directed to a method of improving the cleaning performance of a liquid detergent composition, by adding an polymer (A) to a detergent composition comprising at least one lipase and/or at least one protease.

The term "improved cleaning performance" herein may indicate that polymers (A) provide better, i.e., improved, properties in stain removal under relevant cleaning conditions, when compared to the cleaning performance of a detergent composition lacking polymer (A). In one embodiment, "improved cleaning performance" means that the cleaning performance of a detergent comprising polymer (A) and at least one enzyme, preferably at least one hydrolase (B), especially at least one lipase (B) and/or at least one protease (D), is improved when compared to the cleaning performance of a detergent comprising polymer (A) and no enzyme. In one embodiment, "improved cleaning performance" means that the cleaning performance of a detergent comprising polymer (A) and an enzyme, preferably hydrolase (B), more preferably lipase (B) and/or protease (D), is improved when compared to the cleaning performance of a detergent comprising at least one enzyme, preferably at least one hydrolase (B), preferably lipase (B) and/or at least one protease (D) and no polymer (A).

The term "relevant cleaning conditions" herein refers to the conditions, particularly cleaning temperature, time, cleaning mechanics, suds concentration, type of detergent and water hardness, actually used in laundry machines, automatic dish washers or in manual cleaning processes.

Polymers (A) are excellently suited as or for the manufacture of inventive compositions. Polymers (A) show biodegradability.

Also disclosed but not claimed is a process for making polymers (A), hereinafter also referred to as process. The process comprises the steps (α) and (β):
(α) providing a backbone molecule (a) that is aliphatic compound with at least 4 amino groups per molecule of which at least one amino group is a -(CH₂)ₐ-NH₂ group, the variable a being selected from 2 to 4,
(β) reacting said backbone molecule with at least one sugar molecule based on a mono-, di- or polysaccharide in the presence of hydrogen and a catalyst or in the presence of an aminoborane.

Steps (α) and (β) are described in more detail below.

Backbone molecules (a) have been described in more detail above.

The ratio of backbone molecule (a) and sugar molecule based on a mono-, di- or polysaccharide is preferably selected in a way that the molar amount of "aldehyde" groups corresponds to at least 40 mol-% of the primary amino groups of backbone (a), preferably 40 to 100 mol-%, more preferably 45 to 90 mol-%.

Optionally, backbone molecule (a) is provided in bulk. However, the reaction is preferably carried out in solution, and it is advantageous to provide backbone molecule (a) in solution. Suitable solvents are water and mixtures of water and alcohols like, e.g., methanol and ethanol, glycols like ethylene glycol, propylene glycol, and diethylene glycol as well as polyethylene glycol, for example with an average molecular weight Mₙ up to 500 g/mol, with a water content of preferably at least 70% by weight. The solubility of many sugars in organic solvents is limited, and therefore, water and combinations of water with methanol or ethanol are preferred.

Step (β) includes a reduction of the sugar molecule and a coupling with backbone molecule (a). Step (β) may be carried out at temperatures in the range of from ambient temperature to 120°C. Preferred are 25 to 70°C. In case of solvents like methanol and ethanol, the boiling temperature is the upper limit. Even more preferred are 40 to 65°C.

Optionally, especially when hydrogen in the presence of a catalyst is used, step (β) is carried out at a pressure in the range of from 1 to 200 bar (absolute).

Optionally, especially when an aminoborane is used as a reducing agent, step (β) is carried out at a pressure in the range of from 1 to 5 bar (absolute), especially at ambient pressure.

Optionally, especially when hydrogen in the presence of a catalyst is used, step (β) is carried out at a temperature in the range of from 25 to 125°C. Optionally, especially when an aminoborane is used as a reducing agent, step (β) is carried out at a temperature in the range of from 20 to 100°C. Examples of suitable catalysts are hydrogenation catalysts such as, but not limited to Raney metals such as Raney-nickel as well as supported metal catalysts such as Ru, Rh or Pd on charcoal, silica or ZrO₂.

Examples of suitable aminoboranes are in particular aromatic aminoboranes, for example aniline-BH₃, picoline boranes such as α-picoline borane, pyridine borane, pyridine tetrahydroborato zinc and also other boron-based reducing agents, such as sodium cyanoborohydride, sodium triacetoxyborohydride, sodium borohydride, and titanium isopropoxide/ sodium borohydride. Each hydrogen and aminoborane are used in at least stoichiometric an amount, preferably in excess with respect to reducable "aldehyde" group of the sugar molecule.

Step (β) is preferably carried out at a slightly acidic pH value, for example 3 to 6.5, preferably 3.5 to 5.5. The pH value may be adjusted by addition of a carboxylic acid such as, but not limited to formic acid or acetic acid.

Without wishing to be bound by any theory, we assume that in a first reaction, an amino group reacts with the "aldehyde" group under ring opening and formation of a hemi-aminal, followed by reduction of the hemi-aminal to a secondary amino group.

Optionally, the reaction time of step (β) is generally in the range of from one to 36 hours.

When methanol is used as a solvent, polymer (A) precipitates.

After completion of step (β), polymer (A) is usually obtained as a solution or as precipitate. Work-up steps may be performed, such as but not limited to deactivation of a catalyst or precipitation. Unreacted borane and borane reaction products may be removed together with a supernatant solvent or by filtration **-** polymer (A) preferably precipitates and boron compounds remain in solution.

By performing the inventive process, polymers are obtained in good yield and sufficient purity.

The present invention is further illustrated by working examples.

### General remarks:

The amount and type of amines substituted with residues, such as, for example, backbones (a) and polymers (A) and, optionally, the presence of hydrogen can be determined by identification of primary, secondary and tertiary amino groups in ¹³C-NMR, as described for polyethylenimines in Lukovkin G.M. et al.: Europ. Polymer Journal 1973, 9, 559-565 and St. Pierre T. et al., Geckle M.: ACS Polym. Prep. 1981, 22, 128-129.

¹³C-NMR spectra were recorded in CDCl₃ with a Bruker AV-401 instrument at ambient temperature. ¹H-NMR spectra were recorded in CDCl₃ or CD₃OD with a Bruker AV-401 instrument at ambient temperature.

Percentages are % by weight unless specifically noted otherwise.

The degree of modification (DM) of inventive polymers may be determined by ¹H-NMR spectrometry and is defined as: 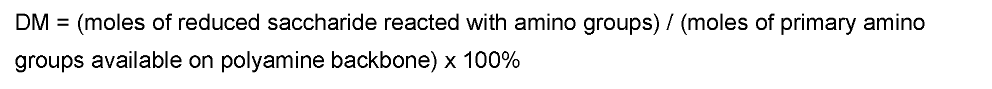 DM = (moles of reduced saccharide reacted with amino groups) / (moles of primary amino groups available on polyamine backbone) x 100%

The determination of dextrose equivalents ("DE") is described in "Analytical Methods of the Member Companies of the Corn Refiners Association, Inc. part Dextrose;" or No. L239 /44 in the Official Journal of the European Community 22.9.79 (First Commission Directive 79/796/EEC of 26 July 1979).

The following starting materials were used:
(a.1): linear ε-polylysine, K-value 19.6, determined in a 1% by weight aqueous solution, commercially available from JNC Corp., Japan
(a.2): branched polylysine, K-value 12.5, synthesis see below
(a.3): N4-amine, commercially available from BASF SE
(a.4): branched polyethyleneimine, M_{w} = 800 g/mol (GPC in water as eluent), commercially available from BASF SE
(b.1): D-maltose
(b.2): maltodextrin, DE 17.8, purchased from Cargill^{®} Cpur Series
(b.3): maltodextrin, DE 28.0, purchased from Cargill^{®} Cpur Series
(b.4): maltodextrin, DE 37.7, purchased from Cargill^{®} Cpur Series
(b.5): D-glucose

### Manufacture of (a.2):

Step (α.2): A 1000 ml four-neck flask equipped with a stirrer, an internal thermometer, a gas inlet tube, a condenser with reduced-pressure connection and a Dean-Stark receiver, was charged with 500 g of an aqueous solution of L-lysine (50 wt%). The solution was heated with stirring to an internal temperature of 160 °C with continuous water removal. After a reaction time of 4.5 hours, water was distilled off under reduced pressure (670 mbar). When 272 g of water distillate had been collected, the highly viscous polymer was discharged to a silicone container as fast as possible while it was still hot and flowable. The k-value of the resultant backbone molecule (a.2) was determined as 12.5 in a 1% by weight aqueous solution.

Step (α.5): A 1000 ml four-neck flask equipped with a stirrer, an internal thermometer, a gas inlet tube, a condenser with reduced-pressure connection and a Dean-Stark receiver, was charged with 500 g of an aqueous solution of L-lysine (50 wt%). The solution was heated with stirring to an internal temperature of 160 °C with continuous water removal. After a reaction time of 3.5 hours, water was distilled off further under reduced pressure (670 mbar). Finally, 255 g of water distillate was collected and the highly viscous polymer was discharged to a silicone resultant backbone molecule (a.5) was determined as 9.8.
Steps (α.1), (α.3): backbone molecules (a.1) and (a.3) were used as commercially available
Step (α.4): backbone molecule (a.4) was degassed in a rotary evaporator prior to step (β)

Step (β) with aminoborane: step (β1). Step (β) with hydrogen/catalyst: step (β2).

### I. Synthesis of polymers (A)

### I.1 Synthesis of copolymers with α-picoline borane as reducing agent

### I.1.1 Step (β1.1) - synthesis of polymer (A.1)

In a 250 ml round-bottom flask equipped with a magnetic stirrer, a condenser and a gas bubbler, 20.0 g of (a.1) were dissolved in 110 g of water: acetic acid 10:1 wt under stirring. Then, 24.6 g of (b.1) as powder were added to the solution followed by dropwise addition of a solution of 7.30 g of α-picoline borane in 50 ml methanol. The pH value at the beginning of the reaction was between 3.5-4.5. Gas evolution was observed. The reaction was allowed to proceed at ambient temperature until the reaction mixture was transparent and no visible gas bubbles were generated any more.

Work-up: the pH value was adjusted to 4 by adding aqueous HCl solution (1 M) and (A. 1) was precipitated in excess methanol (1:10 wt.). The precipitate was collected via filtration and dried in a vacuum oven at 40°C.

Inventive polymer (A.1) was obtained, DM: 47%. Mₙ: 13,315 g/mol, M_{w}: 13,952 g/mol.

### I.1.2 Step (β1.2) - synthesis of polymer (A.2)

In a 250 ml round-bottom flask equipped with a magnetic stirrer, a condenser and a gas bubbler, 20 g of (a.1) were dissolved in 110 g of water: acetic acid 10:1 wt under stirring. Then, 57.2 g of (b.1) as powder were added to the solution followed by dropwise addition of a solution of 17.0 g of α-picoline borane in 50 ml methanol. The pH value at the beginning of the reaction was between 3.5-4.5. Gas evolution was observed. The reaction was allowed to proceed at ambient temperature until the reaction mixture was transparent and no visible gas bubbles were generated any more. After work-up as above, polymer (A.2) was obtained, DM: 91%, Mₙ: 20,071 g/mol, M_{w}: 21,031 g/mol.

### I.1.3 Step (β1.3) - synthesis of polymer (A.3)

In a 250 ml round-bottom flask equipped with a magnetic stirrer, a condenser and a gas bubbler, 10.0 g of (a.2) were dissolved in 60 g of water: acetic acid 10:1 wt under stirring. Then, 28.6 g of (b.1) as powder were added to the solution followed by dropwise addition of a solution of 4.25 g of α-picoline borane in 25 ml methanol. The pH value at the beginning of the reaction was between 3.5-4.5. Gas evolution was observed. The reaction was allowed to proceed at ambient temperature until the reaction mixture was transparent and no visible gas bubbles were generated any more. After work-up as above, polymer (A.3) was obtained, DM: 81%, Mₙ: 4,460 g/mol, M_{w}: 8,278 g/mol.

### I.1.4 Step (β1.4) - synthesis of polymer (A.4)

In a 250 ml round-bottom flask equipped with a magnetic stirrer, a condenser and a gas bubbler, 4.0 g of (a.1) were dissolved in 70 g of water: acetic acid 10:1 wt. under stirring. Then, 31.6 g of (b.2) were added to the solution as powder followed by dropwise addition of a solution of 3.34 g of α-picoline borane in 5 ml methanol. The pH value at the beginning of the reaction was between 3.5-4.5. Gas evolution was observed. The reaction was allowed to proceed at ambient temperature until the reaction mixture was transparent and no visible gas bubbles were generated any more. After work-up as above, polymer (A.4) was obtained, DM: 40%, Mₙ: 26,762 g/mol and M_{w}: 31,905 g/mol.

### I.1.5 Step (β1.5) - synthesis of polymer (A.5)

In a 250 ml round-bottom flask equipped with a magnetic stirrer, a condenser and a gas bubbler, 4.0 g of (a.2) were dissolved in 70 g of water: acetic acid 10:1 wt. under stirring. Then, 31.6 g of (b.2) with DE = 17.8 were added as powder to the solution, followed by dropwise addition of a solution of 3.34 g of α-picoline borane in 5 ml methanol. The pH value at the beginning of the reaction was between 3.5-4.5. Gas evolution was observed. The reaction was allowed to proceed at ambient temperature until the reaction mixture was transparent and no visible gas bubbles were generated any more. After work-up as above, polymer (a.5) was obtained. DM: 58%, Mₙ: 8,704 g/mol and M_{w}: 18,551 g/mol.

### I.1.6 Step (β1.6) - synthesis of polymer (A.6)

In a 250 ml round-bottom flask equipped with a magnetic stirrer, a condenser and a gas bubbler, 60.0 g of (b.1) were dissolved in 110 g of water: acetic acid 10:1 wt. under stirring. Then, 20.0 g of (a.4) were added to the solution, followed by dropwise addition of a solution of 18.8 g of α-picoline borane in 50 ml methanol. The pH value at the beginning of the reaction was between 3.5-4.5. Gas evolution was observed. The reaction was allowed to proceed at ambient temperature until the reaction mixture was transparent and no visible gas bubbles were generated any more. After work-up as above, polymer (A.6) was obtained, DM: 48%, Mₙ: 1,336 g/mol and M_{w}: 1,781 g/mol.

### I.1.7 Step (β1.7) - synthesis of polymer (A.7)

In a 250 ml round-bottom flask equipped with a magnetic stirrer, a condenser and a gas bubbler, 25.3 g of (b.1) were dissolved in 70 g of water: acetic acid 10:1 wt. under stirring. Then, 3.0 g of (a.4) were added to the solution, followed by dropwise addition of a solution of 2.67 g of α-picoline borane in 5 ml methanol. The pH value at the beginning of the reaction was between 3.5-4.5. Gas evolution was observed. The reaction was allowed to proceed at ambient temperature until the reaction mixture was transparent and no visible gas bubbles were generated any more. After work-up as above, polymer (A.7) was obtained, DM: 48%, Mₙ: 3,060 g/mol, M_{w}: 4,663 g/mol.

### I.1.8 Step (β1.8) - synthesis of polymer (A.8)

In a 250 ml round-bottom flask equipped with a magnetic stirrer, a condenser and a gas bubbler, 3.0 g of (a.5) were dissolved in 70 g of water: acetic acid 10:1 wt. under stirring. Then, 20.8 g of (b.2) were added to the solution followed by dropwise addition of a solution of 2.20 g of α-picoline borane in 5 ml methanol. The pH value at the beginning of the reaction was between 3.5-4.5. Gas evolution was observed. The reaction was allowed to proceed at ambient temperature until the reaction mixture was transparent and no visible gas bubbles were generated any more. After work-up as above, polymer (A.8) was obtained, DM: 97%, Mₙ: 4,763 g/mol, M_{w}: 6,789 g/mol.

### I.2 Synthesis of copolymers by catalytic hydrogenation

### I.2.1 General protocol

In a magnetically coupled stirred 300-mL-autoclave (stainless steel V4A) with inclined blade stirrer, electric heating, internal temperature cascade control; H₂ press-on via iterative differential pressure dosing, 45 g of the respective sugar (b) were dissolved in water to obtain 100 ml of a 50 wt. % solution. The resulting solution was mixed with the corresponding backbone (a) to obtain a DE/amine molar ratio of 1:1, see Table 2. An amount of 2.25 g catalyst - Ru on charcoal - was added. The autoclave was flushed with nitrogen and then with hydrogen. Then, 10 bar hydrogen were pressed on cold. The reactor heated to 60 °C under hydrogen pressure of 100 bar for 12 hours and stirred at 500 rpm. Then, the autoclave was allowed to cool to ambient temperature, expanded and degassed. The resulting reaction mixture was purified by a freeze drying procedure. Lyophilization conditions: Freeze-drying at approx. 75 °C at the refrigeration machine and -70°C in the condenser (in the chamber). Freeze-dryer Sublimator EKS 100. The sample was rapidly cooled in the first chamber, to about -50°C. The compressor then created a "vacuum" in the second chamber with a maximum pressure of 6.10 mbar. This strong negative pressure causes the moisture to pass the valve from the product chamber into the second chamber. Then the resultant polymer was washed with 50 ml methanol prior to drying.

### I.2.2 Specific examples in tabular form

**Table 2: Manufacture of inventive polymers**

| polymer | Backbone (a) | Backbone [g] | Mol NH₂ groups | (b) | Water [g] |
|---|---|---|---|---|---|
| (A.10) | (a.3) | 10.75 | 1.14 | (b.3) | 55.75 |
| (A.11) | (a.4) | 165 | 1.00 | (b.4) | 61.50 |
| (A.12) | (a.3) | 10.21 | 1.14 | (b.5) | 66.75 |

### II. Washing tests

### II.1 Tests with polymers (A.1) to (A.8)

For a test procedure on the basis of L.1, as a softener formulatopn10 g of dipalmitoylethylhy-droxyethylmonium methosulfate and 0.3 g of CaCl₂ were mixed. Water was added to a total of 100 g. The pH value was 4.

**Table 3: Ingredients of base mixtures L.1 and L.2 for liquid detergent formulations**

| ingredient | [%], L.1 | [%], L.2 |
|---|---|---|
| Alkylbenzene sulfonic acid (C₁₀-C₁₃), Na salt | 15.1 | 5.5 |
| lauryl ether sulphate (C.1), 2 EO | 23.8 | 5.5 |
| C₁₃/C₁₅-oxoalkohol reacted with 7 mol of EO | 1.6 | 5.5 |
| Potassium cocoate | - | 2.4 |
| KOH | - | 1.6 |
| 1,2-propylene glycol | - | 6.0 |
| ethanol | 4.0 | 2.0 |
| Na₂SO₄ | 0.3 | - |
| NaCl | 0.1 | - |
| Sodium citrate | 2.5 | - |
| Polymer (A) | 5.4 | 1.0 |
| Only L.1: Adjust with NaOH to pH value of 8.0 | | |
| Water | to 100 | To 100 |

| | | |
|---|---|---|
| EO: ethylene oxide | | |

A test soil mixture was prepared according to Table 5, by mixing 75% deionized water, 20% yellow clay (JIS Soil), 3.75% peanut oil (Luhua oil, Shandong) and 1.25% mineral oil. Specifically, 20% clay dispersion was first added in the water and stirred at 6,500 rpm for 10 min to homogenize. Then, the mixture of the two oils was slowly added and the whole mixture was homogenized for another 10 min.

A laundering process was simulated in lab using a Terg-o-meter (RHLG-IV, from Shanghai Bank Equipment Co. Ltd, China.) which includes 12 barrels with respective rotor blades as washing units, generally following GBT 13174-2008.

Before washing, all the fabrics used were pre-treated with softener. 7 g of the above-described softener formulation was diluted with 10 L of tap water (25°C) and transferred to a Haier mini washing machine MW-PQ28SW. 300 g of fabrics to be used were loaded in the washing machine and stirred for 3 minutes. The treated fabrics were then transferred to another washing machine of same model without rinsing, spin-dried for 1 minute and then dried at 40°C for one hour.

The washing units were operated at the stirring speed of 120 rotations per minute (rpm), each containing 1 L hard water (100 ppm Ca: Mg = 3:2). 3 pieces of each type of white test fabrics (15 pieces in total) were washed in the same barrel together with 10 g of a clay and oil mixture at 30 °C in a wash liquor comprising a 0.93 g detergent, with the formulation as shown in Table 3. After the washing, the fabrics were removed from the washing units, drained and rinsed twice in 10 L tap water for 30 seconds. The wash cycle was repeated another two times with new clay and oil mixture and new wash liquor. After the rinsing in the third wash cycle, the test fabrics were dried in air instead. The details of the wash cycles are summarized in Table 4.

The anti-greying performance was characterized by the difference in remission values of the fabric before washing (but after softener treatment for the case L.1) and after washing, measured with the spectrophotometer Elrepho 2000 from Datacolor at 457 nm. The lower the difference in remission (ΔR), the better the performance. Results are summarized in Table 6.

For test procedure L.2, a slightly modified process was followed, using yellow clay - oil mixtures (WFK soil oily mixture).

A laundering process was simulated in the lab using a Tergotometer (RHLQ-IV by RIDCI) which includes individual barrels with respective rotor blades as washing units, generally following GBT 13174-2008. The washing units were operated at the same stirring speed of 120 rpm, each containing 1 L water. White test fabrics were washed in the same barrel together with 10 g of the test soil mixture at 30 °C, in a wash liquor comprising a detergent formulation as shown in Table 3. After the washing, the fabrics were removed from the washing units, drained and rinsed twice in 10 L tap water for 30 seconds. The wash cycle was repeated three times with new yellow clay and oil mixtures and new wash liquor. After the rinsing in the third wash cycle, the test fabrics were dried. The details of the wash cycles are summarized in Table 4.

The anti-greying performance was characterized by the difference in remission values (ΔR), measured with the spectrophotometer Elrepho 2000 from Datacolor at 457 nm. The clean fabric before wash was compared with the washed fabric after wash. The lower the difference in remission (ΔR), the better the performance. Results are summarized in Table 7.

**Table 4: Details of laundering experiments**

| | | |
|---|---|---|
| Parameter | Tests with L.1 or L.2 | |
| Machine Type | Tergotometer, model (RHLG-IV) 120 rpm | |
| Washing Liquor/ g | 1000 g | |
| Detergent | Based on L.1 | Based on L.2 |
| Detergent dosage/ [g/L] | 0.93 g/l | 2 g/l |
| Water hardness/ [mg CaCO₃/L] | 100 ppm | 250 ppm |
| Ca:Mg Ratio | 3:2 | |
| Fabric Type | Cotton woven WFK 10A, Cotton towel WFK 12A, PES/ PO woven WFK 20A, Polyester woven WFK 30A, Cotton knitted WFK 80A | |
| Fabric Size/ cm*cm | 3 pieces, 6*6 each | |
| Fabric Amount/ Piece | 15 (3 pieces of each type fabric) in each leg | |
| Stain Type | 10 g/L, red clay (JIS) - oil mixture according to Table 5 | 10 g/L yellow clay - oil mixtures (WFK soil oily mixture) |
| Washing Time/ min | 30 min | |
| Washing Temp./ °C | 30 °C | |
| Washing Cycle | 3 | |
| Washing Repeat | 1 | |
| Rinsing Conditions | Haier mini top-loading machine, max water level (10 L) model: Haier MW-PQ28SW | |
| Drying Conditions | Naturally | |
| Fabric Measurement | After 3rd cycle | |

**Table 5: Composition of test soil**

| Red clay and oil mixtures | |
|---|---|
| Ingredient | Active wt.% |
| Red Clay (Japanese Industrial Standards soil) | 20 |
| Peanut oil (Luhua Oil) | 3.75 |
| Mineral oil #26 | 1.25 |
| Deionized water | 75 |

**Table 6: Laundering results with inventive formulations based on L.1**

| Polymer (A) added | ΔR, Sum of all fabrics |
|---|---|
| none | 243.14 |
| (A.1) | 221.66 |
| (A.2) | 218.20 |
| (A.3) | 214.96 |
| (A.6) | 207.13 |

| | |
|---|---|
| The lower the ΔR value the lower the greying. | |

**Table 7: Laundering results with inventive formulations based on L.2**

| Polymer (A) added | ΔR, Sum of all fabrics |
|---|---|
| none | 240.37 |
| (A.1) | 229.58 |
| (A.3) | 234.26 |
| (A.4) | 216.52 |
| (A.5) | 227.50 |
| (A.7) | 220.81 |

### II.2 Tests with inventive polymers (A.10) to (A.14)

The following protocol was used:

| Apparatus | LOM (number: 040) |
|---|---|
| Washing temperature | 30°C |
| Washing time | 60 minutes |
| Base mixture | Commercially available "Persil Kraft-Gel // 3g/L" |
| German water hardness | 2.5 mmol CaCO₃/L |
| Polymerdosierung | 3% (referring to base mixture) |
| Test monitors | 2x MON-BASF-57 or 94 |
| Soil enhancer and base farbric | 2.5g SBL 2004, 20g BW 283 |

The total level of cleaning was evaluated using color measurements. Reflectance values of the stains on the monitors were measured using a sphere reflectance spectrometer (SF 500 type from Datacolor, USA, wavelength range 360-700nm, optical geometry d/8°) with a UV cutoff filter at 460 nm. In this case, with the aid of the CIE-Lab color space classification, the brightness L *, the value a* on the red - green color axis and the b* value on the yellow - blue color axis, were measured before and after washing and averaged for the respective stains of the monitor. The change of the color value (Delta E, ΔE) value, defined and calculated automatically by the evaluation color tools on the following formula, $ΔE {*}_{ab} = \sqrt{ΔL {*}^{2} + Δa {*}^{2} + Δb {*}^{2}}$ is a measure of the achieved cleaning effect. All experiments were repeated three times to provide a representative average number. Higher Delta E values show better cleaning. For each stain, a difference of 1 unit can be detected visually by a skilled person. A non-expert can visually detect 2 units easily.

**Table 8**

| Test monitor | Inventive polymer | Sum ΔE-values (=L*a*b-value) / average | ΔE-value | Comparative: without polymer (A) |
|---|---|---|---|---|
| 57 | (A.10) | + 3% RD 260900 | 86 | 83 |
| 57 | (A.11 | + 3% RD 260897 | 86 | 83 |
| 57 | (A.10) | + 3% RD 260900 | 84 | 80 |
| 57 | (A.12) | + 3% RD 260901 | 85 | 80 |
| 94 | (A.11) | + 3% RD 260897 | 139 | 136 |

### III. Biodegradation tests

General: the tests were carried out in accordance with the OECD Guidelines. According to the OECD guidelines a test is valid if:
1. The reference reaches 60% within 14 days.
2. The difference of the extremes of the test replicates by the end of the test is less than 20%.
3. Oxygen uptake of inoculum blank is 20 to 30 mg O₂/I and must not be greater than 60 mg O₂/I.
4. The pH value measured at the end of the test must be between 6 and 8.5.

Description of the test method used in the context of the present invention:
Biodegradation in sewage was tested in triplicate using the OECD 301F manometric respirome-try method. OECD 301 F is an aerobic test that measures biodegradation of a sewage sample by measuring the consumption of oxygen. To a measured volume of sewage, 100 mg/L test substance, which is the nominal sole source of carbon, was added along with the inoculum (aerated sludge taken from the municipal sewage treatment plant, Shanghai, PR China, polymer (A.1) to (A.8), or Mannheim, Germany). This sludge was stirred in a closed flask at a constant temperature (25°C) for 28 days. The consumption of oxygen is determined by measuring the change in pressure in the closed flask using an Oxi TopC. Carbon dioxide evolved was absorbed in a solution of sodium hydroxide. Nitrification inhibitors were added to the flask to prevent consumption of oxygen due to nitrification. The amount of oxygen taken up by the microbial population during biodegradation of the test substance (corrected for uptake by a blank inoculum run in parallel) is expressed as a percentage of ThOD (theoretical oxygen demand, which is measured by the elemental analysis of the compound). A positive control glucose/glutamic acid is run along with the test samples for each cabinet as reference.

Calculations: Theoretical oxygen demand: Amount of O₂ required to oxidize a compound to its final oxidation products. This amount is calculated using the elemental analysis data.

### % Biodegradation

Experimental O₂ uptake x 100 and divided by the theoretical oxygen demand

The results of biodegradability tests are summarized in Table 9.

**Table 9: Results of biodegradation tests**

| Polymer | 28 days (%) | 56 days (%) |
|---|---|---|
| (A.1) | 36 | 46 |
| (A.4) | 46 | 47 |
| (A.5) | 52 | 55 |
| (A.7) | 51 | 52 |
| (A.8) | 69 | 71 |
| (A.11) | 30 | 33 |
| (A.12) | 49 | 55 |

### IV. Synthesis of polymers (A.13) to (A.17)

The following starting materials were used:
(a.1): linear ε-polylysine, K-value 19.6, determined in a 1% by weight aqueous solution, commercially available from JNC Corp., Japan
(a.2): branched polylysine, K-value 12.5, synthesis see below
(a.3): N4-amine, commercially available from BASF SE
(a.4): branched polyethyleneimine, Mw = 800 g/mol (GPC in water as eluent), commercially available from BASF SE
(a.5): branched polylysine, K-value 9.8, synthesis see below
(a.6): branched polylysine, K-value 10.7, synthesis see below
(a.7): branched polylysine, K-value 11.0, synthesis see below
(b.1): D-maltose
(b.2): maltodextrin, DE 17.8, purchased from Cargill^{®} Cpur Series
(b.3): maltodextrin, DE 28.0, purchased from Cargill^{®} Cpur Series
(b.4): maltodextrin, DE 37.7, purchased from Cargill^{®} Cpur Series
(b.5): D-glucose
(b.6): maltodextrin, DE 9.0, purchased from Roquette Glucidex Series
(b.7): cellulose, DE16.7 purchased from Sigma-Aldrich

### Manufacture of (a.2):

### Step (α.6): branched polylysine K-value 10.7

A 1000 ml four-neck flask equipped with a stirrer, an internal thermometer, a gas inlet tube, a condenser with reduced-pressure connection and a Dean-Stark receiver, was charged with 500 g of an aqueous solution of L-lysine (50 wt%). The solution was heated with stirring to an internal temperature of 160 °C with continuous water removal. After a reaction time of 4.0 hours, water was distilled off under reduced pressure (670 mbar). When 260 g of water distillate had been collected, the highly viscous polymer was discharged to a silicone container as fast as possible while it was still hot and flowable. The k-value of the resultant backbone molecule (a.6) was determined as 10.7 in a 1% by weight aqueous solution.

### Step (α.7): branched polylysine K-value 11.0

A 1000 ml four-neck flask equipped with a stirrer, an internal thermometer, a gas inlet tube, a condenser with reduced-pressure connection and a Dean-Stark receiver, was charged with 500 g of an aqueous solution of L-lysine (50 wt%). The solution was heated with stirring to an internal temperature of 160 °C with continuous water removal. After a reaction time of 4.0 hours, water was distilled off under reduced pressure (670 mbar). When 262 g of water distillate had been collected, the highly viscous polymer was discharged to a silicone container as fast as possible while it was still hot and flowable. The k-value of the resultant backbone molecule (a.7) was determined as 11.0 in a 1% by weight aqueous solution.

### Synthesis of polymers (A)

### Synthesis of copolymers with α-picoline borane as reducing agent

### Polymer (A.13)

In a 250 ml round-bottom flask equipped with a magnetic stirrer, a condenser and a gas bubbler, 3.0 g of (a.6) were dissolved in 70 g of water: acetic acid 10:1 wt. under stirring. Then, 20.8 g of (b.2) were added to the solution followed by dropwise addition of a solution of 2.20 g of α-picoline borane in 5 ml methanol. The pH value at the beginning of the reaction was between 3.5-4.5. Gas evolution was observed. The reaction was allowed to proceed at 85°C for 24 h. After work-up as above, polymer (A.13) was obtained, DM: 72%, Mn: 5,426 g/mol. Mw: 6,974 g/mol.

### Polymer (A.14)

In a 250 ml round-bottom flask equipped with a magnetic stirrer, a condenser and a gas bubbler, 3.0 g of (a.6) were dissolved in 90 g of water: acetic acid 10:1 wt. under stirring. Then, 42.0 g of (b.6) were added to the solution followed by dropwise addition of a solution of 2.25 g of α-picoline borane in 5 ml methanol. The pH value at the beginning of the reaction was between 3.5-4.5. Gas evolution was observed. The reaction was allowed to proceed at ambient temperature until the reaction mixture was transparent and no visible gas bubbles were generated any more. After work-up as above, polymer (A.14) was obtained, DM: 48%, Mn: 6,913 g/mol, Mw: 17,322 g/mol.

### Polymer (A.15)

In a 250 ml round-bottom flask equipped with a magnetic stirrer, a condenser and a gas bubbler, 2.7 g of (a.2) were dissolved in 90 g of water: acetic acid 10:1 wt. under stirring. Then, 42.0 g of (b.6) were added to the solution followed by dropwise addition of a solution of 2.25 g of α-picoline borane in 5 ml methanol. The pH value at the beginning of the reaction was between 3.5-4.5. Gas evolution was observed. The reaction was allowed to proceed at 85°C for 24 h. After work-up as above, polymer (A.15) was obtained, DM: 44%, Mn: 12,252 g/mol. Mw: 50,844 g/mol.

### Polymer (A.16)

In a 250 ml round-bottom flask equipped with a magnetic stirrer, a condenser and a gas bubbler, 4.0 g of (a.1) were dissolved in 90 g of water: acetic acid 10:1 wt. under stirring. Then, 47.4 g of (b.2) were added to the solution followed by dropwise addition of a solution of 3.34 g of α-picoline borane in 5 ml methanol. The pH value at the beginning of the reaction was between 3.5-4.5. Gas evolution was observed. The reaction was allowed to proceed at 60°C for 24 h. After work-up as above, polymer (A.16) was obtained, DM: 86%, Mn: 50,570 g/mol. Mw: 61,292 g/mol.

### Polymer (A.17)

In a 250 ml round-bottom flask equipped with a magnetic stirrer, a condenser and a gas bubbler, 3.0 g of (a.7) were dissolved in 70 g of water: acetic acid 10:1 wt. under stirring. Then, 18.50 g of (b.7) were added to the solution followed by dropwise addition of a solution of 2.25 g of α-picoline borane in 5 ml methanol. The pH value at the beginning of the reaction was between 3.5-4.5. Gas evolution was observed. The reaction was allowed to proceed at at 60°C for 24 h. After work-up as above, polymer (A.17) was obtained, DM: 66%, Mn: 5,166 g/mol, Mw: 8,594 g/mol.

### V. Biodegradability of polymers (A.13) to (A.17)

**Table 10: Results of biodegradation tests**

| Polymer | 28 days (%) | 56 days (%) |
|---|---|---|
| (A.13) | 68 | 68 |
| (A.14) | 72 | 79 |
| (A.15) | 69 | 72 |
| (A.16) | 69 | 69 |
| (A.17) | 63 | 68 |

### VI. Wash performance of polymers (A.13) to (A.17)

### Anti-greying Performance

### Test 1 Yellow clay Asian conditions

A laundering process was simulated in lab using a Terg-o-meter (RHLG-IV, from Shanghai Bank Equipment Co. Ltd, China), which includes 12 barrels with respective rotor blades as washing units, generally following GBT 13174-2008. The washing units were operated at the same stirring speed of 120 rotation per minute (rpm) and each contained 1 L washing liquor. White test fabrics were washed in the same barrel together with together with 10 g yellow clay and oil mixtures at 30 °C, in a wash liquor comprising a detergent formulation as shown in Table xx. After the washing, the fabrics were removed from the washing units, drained and rinsed twice in 10 L tap water for 30 seconds and dried in air. The details of the wash cycles are summarized in Table xx.

The anti-greying performance was characterized by Remission R value of the soiled fabric after wash and determined by measuring the fabric with the spectrophotometer Elrepho 2000 from Datacolor at 457 nm. The higher the Remission R value, the better is the performance. Results were summarized in Table xx.

**Table 11: Ingredients for liquid detergent formulation.**

| **Detergent Formulation CN, L.3** | |
|---|---|
| **Ingredient** | **Amount, wt%** |
| Linear alkylbenzene sulfonate (C₁₀-C₁₃), Na salt | 4.0 |
| Lauryl ether sulphate (C.1), 2 EO | 8.0 |
| C13/C15-oxoalkohol reacted with 7 mol of ethylene oxide | 4.0 |
| Potassium cocoate | 1.0 |
| Sodium citrate | 1.5 |
| 1,2 propylene glycol | 0.5 |
| Sodium sulfate | 0.1 |
| Sodium chloride | 0.6 |
| Additive as shown in Table 2 | 1.0 |
| Water | up to 100 |
| Adjust pH to 8 | |

**Table 12: Details of laundering experiments**

| | |
|---|---|
| Equipment | Terg-O-meter |
| Detergent dosage | 2 g/L |
| Detergent | Formulation as shown in Table xx |
| Water hardness | 2.5 mmol/L |
| Ca: Mg | 3:2 |
| Washing temperature | 30 °C |
| Wash cycles | 3 (30 min) |
| Wash liquor | 1000 ml |
| White test fabric (3 pieces for each, each 6 x 6 cm) | Cotton: WFK 10A, WFK 80A, WFK 12A; PES/Cotton blend: WFK 20A; Polyester: WFK 30A |
| Test soil | 10 g/L yellow clay and oil mixtures (WFK soil oily mixture) |
| Rinsing conditions | Tap water directly, max water level (10 L) |
| Drying sonditions | Naturally |

**Table 13: Laundering results**

| **Additive** | **R, Sum of all fabrics** |
|---|---|
| Blank | 344.20 |
| PA25 | 357.98 |
| HP20 | 355.92 |
| Maltodextrin-g-PAA Graft Bio Bverde 790 | 354.69 |
| (A.8) | 350.20 |
| (A.13) | 352.51 |
| (A.14) | 354.33 |
| (A.15) | 354.32 |
| (A.16) | 361.42 |
| (A.17) | 350.40 |

### Compatibility with liquid laundry detergent formulations

**Table 14: Ingredients for liquid detergent formulations**

| **Ingredient** | **L.1, wt%** | **L.2, wt%** | **L.3, wt%** | **L.4, wt%** |
|---|---|---|---|---|
| Linear alkylbenzene sulfonate (C₁₀-C₁₃), Na salt | 15.1 | 5.5 | 4.0 | 5.0 |
| Lauryl ether sulphate (C.1), 2 EO | 23.8 | 5.5 | 8.0 | 19.6 |
| C13/C15-oxoalkohol reacted with 7 mol of ethylene oxide | 1.6 | 5.5 | 4.0 | 6.7 |
| Potassium cocoate | - | 2.4 | 1.0 | 2.7 |
| KOH | - | 1.6 | - | - |
| Sodium citrate | 2.5 | - | 1.5 | 4.1 |
| 1,2 propylene glycol | - | 6.0 | 0.5 | 2.7 |
| Glycerol | - | - | - | 0.4 |
| Sodium sulfate | 0.3 | - | 0.1 | - |
| Sodium chloride | 0.1 | - | 0.6 | - |
| Ethanol | 4.0 | 2.0 | - | 0.8 |
| Additive | As shown in Table 15 | | | |
| Water | up to 100 | | | |
| Adjust pH to 8 | | | | |

**Table 15: Compatibility of additives in liquid detergent formulations**

| **Formulation** | **L.1** | **L.2** | **L.3** | **L.4** | |
|---|---|---|---|---|---|
| **Additive** | **5.4% wt.** | **1% wt.** | **1% wt.** | **1% wt.** | **3% wt.** |
| (A.1) | √ | √ | n.a. | √ | √ |
| (A.2) | √ | √ | n.a. | √ | √ |
| (A.3) | √ | √ | n.a. | √ | √ |
| (A.4) | n.a. | √ | n.a. | √ | √ |
| (A.5) | n.a. | √ | n.a. | √ | √ |
| (A.6) | √ | √ | n.a. | √ | √ |
| (A.7) | n.a. | √ | n.a. | √ | √ |
| (A.8) | n.a. | n.a. | √ | √ | × |
| (A.13) | n.a. | n.a. | √ | √ | × |
| (A.16) | n.a. | n.a. | √ | √ | √ |
| √: Transparent, ○: Turbid, ×: Phase-separate | | | | | |

## Claims

1. Aqueous detergent composition comprising
(A) at least one polymer comprising
(a) a backbone that is derived from an aliphatic compound with at least 4 amino groups per molecule of which at least one amino group is a -(CH₂)ₐ-NH₂ group, the variable a being selected from 2 to 4, wherein at least 40 mol-% of said CH₂-(CH₂)ₐ-NH₂ groups are converted with
(b) a sugar based on a mono-, di- or polysaccharide under formation of a secondary amino group of the general formula -(CH₂)ₐ-NH-CH₂-;
wherein said composition additionally comprises
(B) at least one hydrolase, or
(C) at least one anionic surfactant.

2. Composition according to claim 1 wherein said backbone (a) is selected from H₂N-(CH₂)₃-NH-CH₂CH₂-N(CH₂)₃-NH₂, polyethylenimine, and (poly)peptides with an average of at least two lysine moieties as building block.

3. Composition according to claim 1 or 2 wherein said backbone (a) is selected from branched polyethylenimines with an average molecular weight M_{w} in the range of from 500 to 20,000 g/mol.

4. Composition according to claim 1 or 2 wherein said backbone (a) is selected from ε-polylysine with a molecular weight M_{w} in the range of from 1,000 to 8,000 g/mol.

5. Composition according to any of the preceding claims wherein polymer (A) has an average molecular weight M_{w} in the range from 750 to 350,000 g/mol.

6. Composition according to any of the preceding claims wherein sugar (b) is a maltodextrin.

7. Use of a composition according to any of the preceding claims for laundry care.

8. Method of improving the cleaning performance of a liquid detergent composition, by adding a polymer (A) according to any of claims 1 to 6 to a detergent composition that comprises at least one lipase (b) and/or at least one protease (D).

## Patentansprüche

1. Zusammensetzung eines wässrigen Waschmittels mit
(A) mindestens ein Polymer, das aus
(a) ein Rückgrat, das von einer aliphatischen Verbindung mit mindestens 4 Aminogruppen pro Molekül abgeleitet ist, von denen mindestens eine Aminogruppe eine -(CH2)a-NH2-Gruppe ist, wobei die Variable a von 2 bis 4 ausgewählt wird, wobei mindestens 40 mol % der genannten CH2-(CH2)a-NH2-Gruppen umgewandelt werden mit
(b) ein Zucker, der auf einem Mono-, Di- oder Polysaccharid basiert, der eine sekundäre Aminogruppe der allgemeinen Formel -(CH2)a-NH-CH2- bildet;
wobei der Aufsatz zusätzlich umfasst
(B) mindestens eine Hydrolase, oder
(C) mindestens ein anionisches Tensid.

2. Zusammensetzung gemäß Behauptung 1, wobei das genannte Rückgrat (a) aus H2N-(CH2) ausgewählt wird₃-NH-CH2CH2-N(CH2)₃-NH2, Polyethylenimin und (Poly)peptide mit durchschnittlich mindestens zwei Lysingruppen als Baustein.

3. Zusammensetzung gemäß Anspruch 1 oder 2, wobei das genannte Rückgrat (a) aus verzweigten Polyethyleniminen mit einem durchschnittlichen Molekulargewicht Mw im Bereich von 500 bis 20.000 g/mol ausgewählt wird.

4. Zusammensetzung gemäß Anspruch 1 oder 2, wobei das genannte Rückgrat (a) aus ε-Polylysin mit einem Molekulargewicht Mw im Bereich von 1.000 bis 8.000 g/mol ausgewählt wird.

5. Zusammensetzung gemäß einer der vorangegangenen Behauptungen, wobei Polymer (A) ein durchschnittliches Molekulargewicht Mw im Bereich von 750 bis 350.000 g/mol hat.

6. Zusammensetzung gemäß einer der vorangegangenen Ansprüche, bei denen Zucker (b) ein Maltodextrin ist.

7. Verwendung eines Aufsatzes gemäß einer der vorherigen Ansprüche zur Wäschepflege.

8. Methode zur Verbesserung der Reinigungsleistung einer Flüssigwaschmittel-Zusammensetzung, indem ein Polymer (A) gemäß einer der Ansprüche 1 bis 6 zu einer Reinigungsmittelzusammensetzung hinzugefügt wird, die mindestens eine Lipase (b) und/oder mindestens eine Protease (D) enthält.

## Revendications

1. Composition aqueuse du détergent comprenant
(A) au moins un polymère comprenant
(a) une colonne vertébrale dérivée d'un composé aliphatique contenant au moins 4 groupes aminos par molécule, dont au moins un groupe amino est un groupe - (CH2)a-NH2, la variable a étant sélectionnée de 2 à 4, où au moins 40 mol- % de ces groupes CH2-(CH2)a-NH2 sont convertis avec
(b) un sucre basé sur un mono-, di- ou polysaccharide sous la formation d'un groupe aminé secondaire de la formule générale -(CH2)a-NH-CH2- ;
où cette composition comprend en plus
(B) au moins un hydrolase, ou
(C) au moins un tensioactif anionique.

2. Composition selon l'affirmation 1 où ledit dorsal (a) est sélectionné à partir de H2N-(CH2)₃-NH-CH2CH2-N(CH2)₃-NH2, polyéthylenimine et (poly)peptides avec en moyenne au moins deux moitiés lysine comme bloc de construction.

3. Composition selon l'affirmation 1 ou 2, où ledit sos (a) est sélectionné parmi des polyéthyléminines ramifiées avec un poids moléculaire moyen Mw allant de 500 à 20 000 g/mol.

4. Composition selon la revendication 1 ou 2, dans laquelle ledit squelette (a) est sélectionnée parmi ε-polylysine avec un poids moléculaire Mw compris entre 1 000 et 8 000 g/mol.

5. Composition selon l'une des affirmations précédentes, dans laquelle le polymère (A) a un poids moléculaire moyen Mw allant de 750 à 350 000 g/mol.

6. Composition selon l'une des affirmations précédentes où le sucre (b) est une maltodextrine.

7. Utilisation d'une composition selon l'une des revendications précédentes concernant l'entretien de la lessive.

8. Méthode d'amélioration des performances de nettoyage d'une composition de détergent liquide, en ajoutant un polymère (A) selon l'une des revendications 1 à 6 à une composition de détergent comprenant au moins une lipase (b) et/ou au moins une protéase (D).
